# EUROPEAN PATENT APPLICATION

(11) **EP 4 497 596 A1**
(43) Date of publication of application: **29.01.2025**
(21) Application number: 22933316.6
(22) Date of filing: 23.03.2022
(51) Int. Cl.: B41J 2/01, B41J 2/02, B41J 2/08, B41J 29/38

(54) **INKJET RECORDING DEVICE AND INKJET RECORDING SYSTEM**

(71) Applicant: Hitachi Industrial Equipment Systems Co., Ltd., Tokyo 101-0021 (JP)
(72) Inventor: ARIMA, Takahiro, Tokyo 101-0022 (JP); OKAWA, Keisuke, Tokyo 101-0022 (JP); MIYAO, Akira, Tokyo 101-0022 (JP); KANUMA, Yu, Tokyo 101-0022 (JP); SAKURABA, Masahiko, Tokyo 101-0022 (JP); TSUKAMOTO, Kazuaki, Tokyo 101-0022 (JP)
(74) Representative: MERH-IP Matias Erny Reichl Hoffmann Patentanwälte PartG mbB
(86) International application number: PCT/JP2022/013508
(87) International publication number: WO 2023/181171

(57) **Abstract**

To provide an inkjet recording device on which maintenance management such as printing head cleaning processing can remotely be performed, and an inkjet recording system. The inkjet recording system includes the inkjet recording device, a server connected to the inkjet recording device, a network connected to the server, and an external control device connected to the network to control the inkjet recording device via the server. The inkjet recording device includes: a printing head including a nozzle that particulates ink and ejects ink particles, a charging electrode that charges the ink particles, a deflection electrode that deflects the charged ink particles, and a gutter that collects the unused ink; a main body control unit that controls the printing head; and a head mounting unit including a printing head mounting portion for containing the print head and a printing head detector that determines whether or not the printing head is contained. The external control device includes: a head mounting checking means that at least checks whether or not a state where the printing head is mounted in the head mounting unit is established; and an ink ejection checking means that checks whether or not the ink is ejected from the nozzle of the printing head.

## Description

### Technical Field

The present invention relates to a continuous-ejection-type inkjet recording device and an inkjet recording system.

### Background Art

As a technology related to a continuous-ejection-type inkjet recording device, a technology described in, e.g., Japanese Unexamined Patent Application Publication No. 2019-123117 (Patent Literature 1) has been known. Patent Literature 1 discloses an inkjet recording device including an ink container in which ink for performing printing on a printing target object is to be contained, a nozzle connected to the ink container to eject the ink supplied under pressure, a charging electrode that charges ink particles ejected from the nozzle, a charge signal generation unit that generates a charge signal for causing the charging electrode to perform the charging, a deflection electrode that deflects the ink particles charged by the charging electrode, a gutter that collects the ink not used for the printing, and a control unit that controls an overall operation and further including a first charge detection means that detects an amount of charge resulting from the charging of the ink particles between the charging electrode and the deflection electrode and a second charge detection means that detects an amount charge of the ink flowing in the gutter.

In addition, a technology described in Japanese Unexamined Patent Application Publication 2021-14040 (Patent Literature 2) has been known. Patent Literature 2 discloses an inkjet recording device including a printing head that receives a supply of ink and performs printing and a main body that includes an ink container for containing ink and a solvent container for containing a solvent and supplies the ink in the ink container to the printing head, in which the printing head includes a nozzle that changes the ink into ink particles and ejects the ink particles, a charging electrode that charges the ink particles ejected from the nozzle correspondingly to details of the printing, a deflection electrode that changes a direction in which the charged ink particles fly, and a gutter that collects the ink particles not involved in the printing and further includes a head cleaning unit including a cleaning tank in which the printing head is to be mounted, a cleaning nozzle that ejects the solvent toward the printing head mounted in the cleaning tank to clean the printing head, and a collection container provided at a bottom portion of the cleaning tank to collect the solvent after cleaning and a drive unit that supplies the solvent to the cleaning nozzle.

Patent Literature 2 also discloses the inkjet recording device that performs control such that, during a period during which the printing head is mounted, the ink in the ink container is supplied to the nozzle at regular intervals, the ink particles ejected from the nozzle are collected with the gutter to be collected into the ink container.

### Citation List

### Patent Literature

Patent Literature 1: Japanese Unexamined Patent Application Publication No. 2019-123117
Patent Literature 2: Japanese Unexamined Patent Application Publication No. 2021-14040

### Summary of Invention

### Technical Problem

Patent Literature 1 describes a configuration of the inkjet recording device for detecting an abnormality such that the ink particles ejected from the nozzle of the printing head cannot be captured with the gutter (generally referred to as beam bending) and a control method thereof. Such an abnormality (beam bending) may possibly occur immediately after the ink ejection from the nozzle is started (when operation is started) and, when the abnormality (beam bending) has occurred, the ink may contaminate periphery of the printing head. Consequently, it is necessary to clean the contaminating ink.

Meanwhile, Patent Literature 2 describes a configuration of the inkjet recording device for ejecting the solvent from the cleaning nozzle toward the printing head mounted in the head cleaning unit to clean the printing head contaminated with the ink and then ejecting air from an air nozzle to dry the solvent sticking to the printing head and a control method thereof.

In Patent Literature 2, in a state where the printing head is mounted in the head cleaning unit, cleaning processing of periodically ejecting the ink once from the nozzle of the printing head at intervals of about two to three days, collecting the ink from the gutter, and circulating the ink is performed as maintenance management to thereby reduce trouble such as ink sticking at the time of next use (when operation is started). Operation information (such as the presence or absence of occurrence of an abnormality) of such automatic ink circulation processing can be checked on an operation screen of the inkjet recording device.

However, in a case where the automatic ink circulation processing is performed on the inkjet recording device that has not been used for a long period, even when an abnormality occurs midway, a worker may leave the abnormality without checking the operation screen. Furthermore, the checking operation is performed by the worker after visiting a place where the inkjet recording device is placed.

Thus, the maintenance management for the printing head, e.g., the cleaning processing is performed by the worker by operating (pushing) a button placed on the operation screen of the inkjet recording device or the like. In addition, depending on the conditions of use of the inkjet recording device, it may be necessary to perform the printing head cleaning processing every time the operation is started (before the ink is ejected from the nozzle). In that case, the worker is required to visit the place where the inkjet recording device is placed each time, which results in troublesome labor and consumption of a lot of work time in a large-scale factory where a plurality of the inkjet recording devices are used or the like.

An object of the present invention lies in providing an inkjet recording device on which maintenance management such as printing head cleaning processing can remotely be performed, and an inkjet recording system.

Another object of the present invention lies in providing an inkjet recording device for which operation information can remotely be checked when automatic ink circulation processing is periodically performed and which can contact a worker and give a request to take action in the event of an abnormality, and an inkjet recording system. Solution to Problem

In a first feature of the present invention, an inkjet recording device includes: a printing head including a nozzle that particulates supplied ink and ejects ink particles, a charging electrode that charges the ink particles ejected from the nozzle, a deflection electrode that deflects the ink particles charged by the charging electrode, and a gutter that collects the ink not used for printing; a main body including an ink supply path for supplying the ink in an ink container to the printing head, an ink collection path for collecting the ink not used for the printing into the ink container, a solvent supply path for supplying a solvent in a solvent container to the ink container, and an adjustment unit that adjusts flows of the ink and the solvent in the respective paths; a main body control unit that controls the adjustment unit of the main body and an operation of the printing head; and a head mounting unit including a head mounting portion for mounting and containing the printing head, and a printing head detector that detects that the printing head is mounted. In the inkjet recording device, the main body control unit includes a transmission means that transmits, to an external control device connected thereto via a network, head mounting detection information indicating that the printing head is mounted in the head mounting unit on the basis of a detection signal from the printing head detector.

In a second feature of the present invention, an inkjet recording system includes: an inkjet recording device; a server connected to the inkjet recording device; a network connected to the server; and an external control device connected to the network to control the inkjet recording device via the server. In the inkjet recording system, the inkjet recording device includes: a printing head including a nozzle that particulates supplied ink and ejects ink particles, a charging electrode that charges the ink particles ejected from the nozzle, a deflection electrode that deflects the ink particles charged by the charging electrode, and a gutter that collects the ink not used for printing; a main body including an ink supply path for supplying the ink in an ink container to the printing head, an ink collection path for collecting the ink not used for the printing into the ink container, a solvent supply path for supplying a solvent in a solvent container to the ink container, and a flow rate adjustment unit that adjusts flows of the ink and the solvent in the respective paths; a main body control unit that controls the flow rate adjustment unit of the main body and an operation of the printing head; and a head mounting unit including a head mounting portion for mounting and containing the printing head, and a printing head detector that detects whether or not the printing head is mounted. The external control device includes a head mounting checking means that can check that the printing head is mounted in the head mounting unit on the basis of head mounting detection information transmitted from the main body control unit and indicating that the printing head is mounted in the head mounting unit. Advantageous Effects of Invention

According to the present invention, by allowing daily maintenance management, such as printing head cleaning processing, to be remotely performed, it is possible to reduce labor and work time of a worker.

In addition, by allowing operation information to be remotely checked when automatic ink circulation processing is periodically performed, it is possible to contact the worker and give a request to take action in the event of an abnormality.

### Brief Description of Drawings

Fig. 1 is a configuration diagram illustrating an overall overview of an inkjet recording device and an inkjet recording system in a first embodiment of the present invention.
Fig. 2 is a path configuration diagram illustrating a configuration of ink supply paths in the inkjet recording device in Fig. 1.
Fig. 3 is a block diagram illustrating a configuration of the inkjet recording device in Fig. 1.
Fig. 4 is a configuration diagram illustrating a configuration in a state where a collection container is removed in a head mounting unit in Fig. 1.
Fig. 5 is a configuration diagram illustrating a state where the collection container and a printing head are mounted in the head mounting unit in Fig. 1.
Fig. 6 is an illustrative view illustrating flows of an operation and monitoring in the inkjet recording system in Fig. 1.
Fig. 7 is an illustrative view illustrating an operation and monitoring screen displayed on an external control device in Fig. 1.
Fig. 8 is a flow chart diagram illustrating operation start processing in the printing head.
Fig. 9 is a path configuration diagram illustrating flows (indicated by thick lines) of liquids such as ink and a solvent and gases such as air and a volatile gas when the operation start processing is performed.
Fig. 10 is a flow chart diagram illustrating operation stop processing in the printing head.
Fig. 11 is a path configuration diagram illustrating the flows (indicated by the thick lines) of the liquids such as the ink and the solvent and the gases such as the air and the volatile gas when the operation stop processing is performed.
Fig. 12 is a flow chart diagram illustrating head cleaning processing in the printing head.
Fig. 13 is a path configuration diagram illustrating the flows (indicated by the thick lines) of the liquids such as the ink and the solvent and the gases such as the air and the volatile gas when the head cleaning processing is performed.
Fig. 14 is an illustrative view illustrating a state where a lot of cleaning liquid is contained in the collection container in the head mounting unit.
Fig. 15 is a flow chart diagram illustrating automatic ink circulation setting processing in the printing head.
Fig. 16 is a path configuration diagram illustrating the flows (indicated by the thick lines) of the liquids such as the ink and the solvent and the gases such as the air and the volatile gas when the automatic ink circulation setting processing is performed.
Fig. 17 is a configuration diagram illustrating an overall overview of the inkjet recording device and the inkjet recording system in a second embodiment of the present invention.
Fig. 18 is a configuration diagram illustrating an overall overview of the inkjet recording device and the inkjet recording system in a third embodiment of the present invention.
Fig. 19 is an illustrative view illustrating the flows of the operation and monitoring in the inkjet recording system in Fig. 18.

### Description of Embodiments

Hereinbelow, a detailed description will be given of embodiments of the present invention with reference to the drawings, but the present invention is not limited to the following embodiments, and various modifications and application examples within the technical concept of the present invention also fall within the scope of the present invention. In addition, in the following drawings, the same numbers (reference signs) may be assigned to the same devices, and a description of the devices that have been already described may be omitted.

### First Embodiment

### <Configuration of Inkjet Recording System>

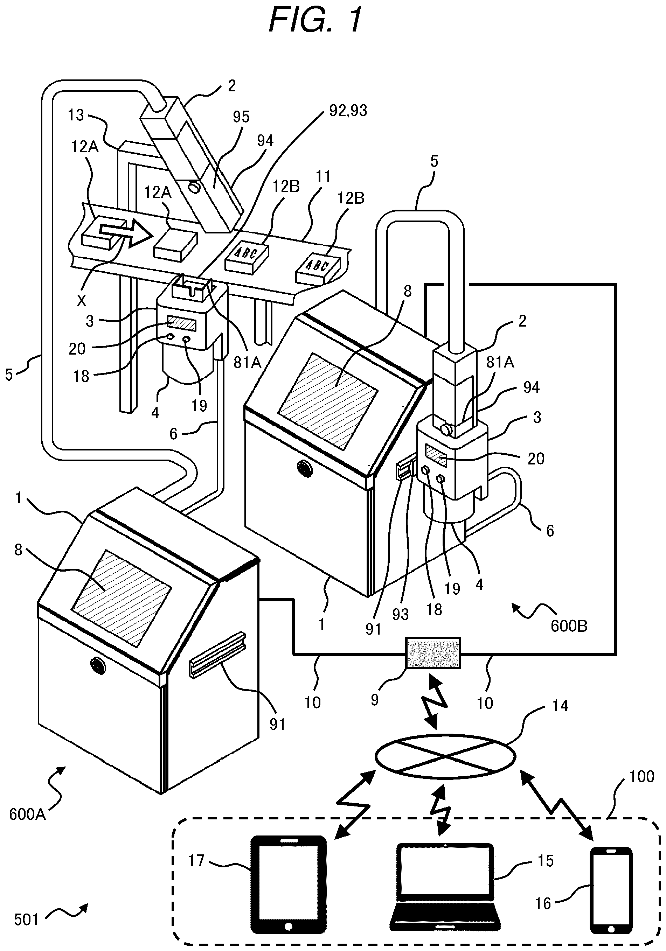

First, referring to Fig. 1, a description will be given of a state where an inkjet recording device and an inkjet recording system are used in the first embodiment of the present invention. Fig. 1 is a perspective view illustrating a situation in which the inkjet recording device is used in the first embodiment of the present invention.

In Fig. 1, an inkjet recording system 501 is configured to include an inkjet recording device 600A or 600B, an IoT site server 9 connected to an inkjet recording device 600 via a cable 10, and an external control device 100 that performs wireless communication with the IoT site server 9 via a network 14.

Each of the inkjet recording devices 600A and 600B includes a main body 1, a printing head 2 connected to the main body 1 via a cable (for printing head) 5, and a head mounting unit 3 connected to the main body 1 via a cable (for head mounting unit) 6. It is to be noted herein that the head mounting unit 3 basically has a function of containing the printing head, but may also have an additional function of ejecting a cleaning liquid and cleaning the print head. The head mounting unit 3 described hereinbelow is configured to have the additional function of cleaning the printing head.

The inkjet recording device 600A shows a state where the printing head 2 is placed on a production line. Meanwhile, the inkjet recording device 600B shows a state where the printing head 2 is removed from the production line and mounted in the head mounting unit 3. Note that a collection container 4 attached to a lower portion of the head mounting unit 3 is provided to collect the cleaning liquid after the cleaning of the printing head by the head mounting unit 3.

The inkjet recording device 600A is installed on a production line in a factory where, e.g., food, beverages, and the like are produced, and the main body 1 is disposed at a place where a space required for periodical maintenance management or the like is available. The printing head 2 is fixed to a support bracket 13 disposed in the vicinity of a conveyer belt 11, and is disposed in proximity thereto so as to perform printing on printing target objects 12A and 12B to be fed in a direction of an arrow X on the production line such as the conveyer belt 11.

To the printing head 2, a protection cover 95 is attached with the view to protecting parts inside the printing head 2. Note that the printing target object 12B shows a state where the printing by the printing head 2 has ended, and the printing target object 12B is conveyed on the conveyer belt 11.

Note that, in Fig. 1, the main body 1 contains (holds) printing ink and controls a drive unit (a pump or solenoid valve) inside the main body to supply the ink to the printing head 2 via the cable (for printing head) 5. It is to be noted herein that details of a path configuration inside the main body 1 and a main body control unit will be described later.

An operation display unit 8 is disposed on an upper surface portion of the main body 1, and a touch input display panel is used herein. By performing a touch operation on the operation display unit 8, an operator can give an instruction to activate or stop the device to the main body control unit or make settings so as to perform the printing on the printing target object 12A. Also, in Fig. 1, a reference numeral 94 in the printing head 2 denotes a head base, while the reference numeral 95 denotes the protection cover.

The head mounting unit 3 is disposed around the printing head 2. The head mounting unit 3 in the inkjet recording device 600A is fixed by combining a fixing jig 92 assembled to the conveyer belt 11 with a fitting portion 93 assembled to the head mounting unit 3. The head mounting unit 3 includes a head mounting portion 81A for mounting the printing head 2 in the head mounting unit.

The head mounting unit 3 further includes a start button 18 for starting cleaning processing for the printing head 2, a stop button 19 for stopping the cleaning processing for the printing head 2, and a display unit 20 for causing a worker to recognize a confirmation message, a warning, or an alarm for an abnormality or the like. The display unit 20 may also cause the worker to recognize an operating state or the presence or absence of an abnormality by using, e.g., the presence or absence of light or color differences.

In the inkjet recording device 600A in the present embodiment, the head mounting unit 3 is fixed to the vicinity of the conveyer belt 11, but the head mounting unit 3 can freely be reattached to a place which allows a user to easily operate the head mounting unit 3. Note that a length of the cable (for head mounting unit) 6 connecting the main body 1 and the head mounting unit 3 is preferably set the same as or longer than that of the cable 5 connecting the main body 1 of the inkjet recording device 600 and the printing head 2. This is intended to ensure flexibility of placement of the head mounting unit.

The main body 1 also has a fixing portion 91 for fixing the head mounting unit 3, and the head mounting unit 3 can also be detached from the fixing jig (for conveyer) 92 and reattached to the fixing portion 91 to be used. In a state where the inkjet recording device 600B is used, the head mounting unit 3 can also be fixed to the main body 1 by combining the fitting portion 93 with the fixing portion 91 assembled to the main body 1.

The head mounting unit 3 of the inkjet recording device 600B is attached to the main body 1. By allowing the head mounting unit 3 to be fixed to the main body 1, even when there is no space where the head mounting unit 3 is to be attached in the vicinity of the conveyer belt 11 or the like, it becomes possible to dispose the head mounting unit 3.

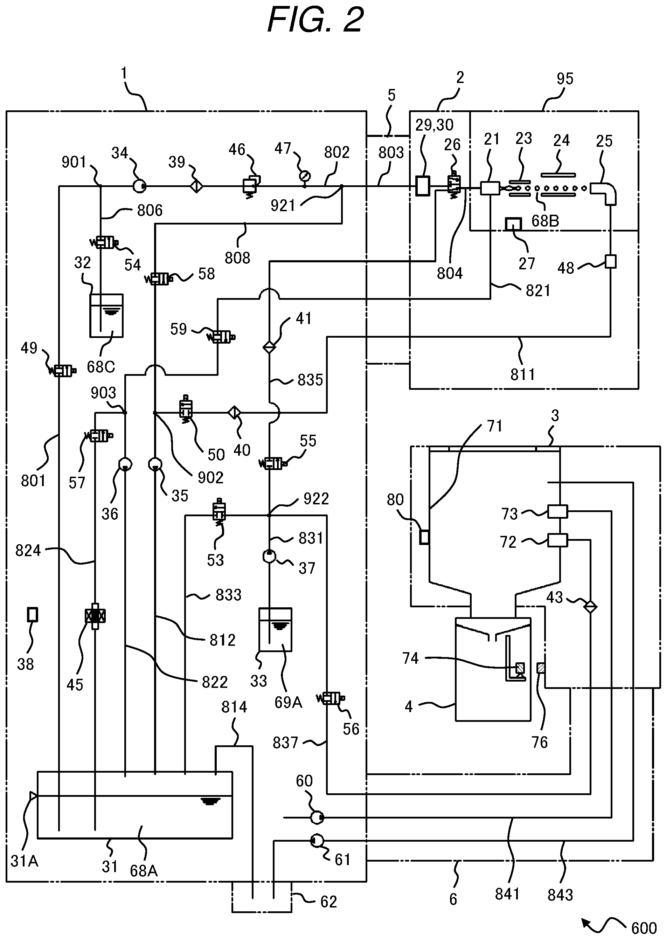

Next, a description will be given of a state where, in the inkjet recording device 600B, the printing head 2 is mounted in the head mounting unit 3. The printing head 2 is mounted by being inserted, from a leading end of the printing head 2 first, into the head mounting portion 81A of the head mounting unit 3. By thus mounting the printing head 2 in the head mounting unit, the inkjet recording device 600 in the present embodiment can clean the printing head 2 with a solvent 69A (see Fig. 2) supplied from the main body 1 side via the cable (for head mounting unit) 6.

For the external control device 100, a device such as a personal computer 15, a smartphone 16, or a tablet 17 can be used. Meanwhile, as the network 14, a "LAN (Local Area Network)", a "WAN (Wide Area Network)", the "Internet", a "mobile phone network", a network obtained by combining these, or the like can be used. The network 14 in the present embodiment has a configuration in which the IoT site server 9 and the external control device 100 are connected using the internet and the mobile phone network.

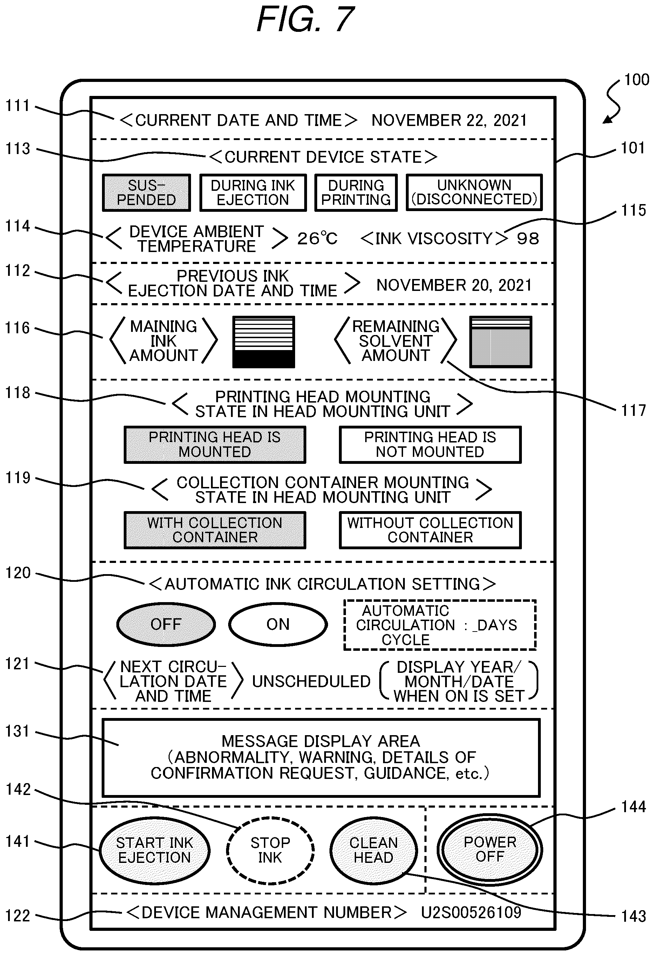

Note that, to the inkjet recording device 600 in the present embodiment, a device management number 122 (see Fig. 7) differing from one device to another is set.

### <Configuration of Ink Supply Paths>

Next, using Fig. 2, a description will be given of a configuration of the ink paths in the inkjet recording device 600 in the first embodiment. Fig. 2 is a diagram illustrating an overall configuration of the paths along which fluids such as ink and a gas flow in the inkjet recording device 600 in the present embodiment. Each of solenoid valves that control flows of fluids such as ink and a gaseous body such as a gas (such as air or a volatile solvent) functions as a "flow rate adjustment unit".

First, a description will be given of ink supply paths (paths 801 to 804) in the inkjet recording device 600. In Fig. 2, the main body 1 includes a main ink container 31 holding ink 68A for performing printing. The main ink container 31 includes a liquid level sensor 31A that senses whether or not the ink 68A in the main ink container 31 has reached a reference liquid level, which is an appropriate amount to be held in the inside thereof.

The main ink container 31 is connected at a portion thereof immersed in the ink 68A to the path (for supply) 801 and, in the middle of the path 801, a solenoid valve (for supply) 49 is disposed to open and close the path. The path 801 is further connected to a pump (for supply) 34 disposed in the path 802 to be used to suction and pressure-feed the ink 68A via a confluence path 901. On an output side of the pump (for supply) 34, the path 801 is connected to a filter (for supply) 39 that removes a foreign substance mixed in the ink 68A.

The filter (for supply) 39 is connected to a pressure adjustment valve 46 that adjusts the ink 68A pressure-fed from the pump (for supply) 34 to a pressure appropriate for printing, while the adjustment valve 46 is connected to a pressure sensor 47 that measures the pressure of the ink 68A supplied to a nozzle 21. The path 802 in which the pressure sensor 47 is disposed is connected to the path 803 passing through the cable (for printing head) 5 via a branched path 921, while the path 803 is connected to a heater 29 included in the printing head 2 to heat the ink 68A to be supplied to the nozzle 8. The heater 29 is connected to a switch valve 26 for controlling whether or not the ink 68A is to be supplied to the nozzle 21.

The switch valve 26 is connected to the nozzle 21 including an ejection port 21A that ejects the ink 68A via the path 804. Note that the switch valve 26 is a 3-way solenoid valve and, to the switch valve 26, the path 803 for ink supply and a path 835 for nozzle cleaning are connected to be able to switch between the supply of the ink 68A and the supply of the solvent 69A to the nozzle 21.

In a straight direction of the ejection port 21A of the nozzle 21, a charging electrode 23 for adding a predetermined amount of charge to ink particles 68B, a deflection electrode 24 for deflecting the ink particles 68B to be used for the printing, and a gutter 25 for capturing the ink particles 68B not used for the printing and therefore linearly flying without being charged or deflected are arranged.

Next, a description will be given of ink collection paths (811 to 812) of the inkjet recording device 600. In Fig. 2, the gutter 25 is connected to the path 811 and, in the path 811, a charge sensor 48 for detecting whether or not the ink particles 68B to which the amount of charge is added by the charging electrode 23 are collected is disposed. In addition, the path 811 passes through the cable (for printing head) 5 to be connected to a filter (for collection) 40 disposed in the main body 1 to remove the foreign substance mixed in the ink, and the filter (for collection) 40 is connected to a solenoid valve (for collection) 50 that opens and closes the path.

The solenoid valve (for collection) 50 is disposed in the path 812 connected via a confluence path 902 to be connected to a pump (for collection) 35 that suctions the ink particles 68B captured by the gutter 25. The pump (for collection) 35 is connected to the main ink container 31. By opening the solenoid valve 50 and driving the pump 35, the ink particles 68B captured by the gutter 25 are collected into the main ink container 31.

Next, a description will be given of an exhaust path (path 814) in the inkjet recording device 600 in the present embodiment. The main ink container 31 is connected to the path 814 in an upper space not in contact with the ink 68A, and the path 814 is configured to be connected to an exhaust duct connection portion 62 communicating with the outside of the main body 1.

Next, a description will be given of ink circulation paths (paths 821 to 822) in the inkjet recording device 600 in the present embodiment. The nozzle 21 included in the printing head 2 is connected not only to the path 804 for ink supply, but also to the path 821 passing through the cable (for printing head) 5. In the path 821, a solenoid valve (for circulation) 59 included in the main body 1 to open and close the flow path is disposed.

The solenoid valve (for circulation) 59 is connected to the path 822 via a confluence path 903 and, in the path 822, a pump (for circulation) 36 is disposed to suction the ink from the nozzle 21. Then, the pump (for circulation) 36 is configured to be connected to the main ink container 31.

Next, a description will be given of viscosity measurement paths (822 to 824) in the inkjet recording device 600 in the present embodiment. In Fig. 2, the main ink container 31 is connected at a portion thereof immersed in the ink 68A to the path (for viscosity measurement) 824. The path (for viscosity measurement) 824 is connected to a viscosity meter 45 to obtain a viscosity of the ink 68A in the main ink container 31. The viscosity meter 45 is connected to a solenoid valve (for viscosity measurement) 57 that opens and closes the path.

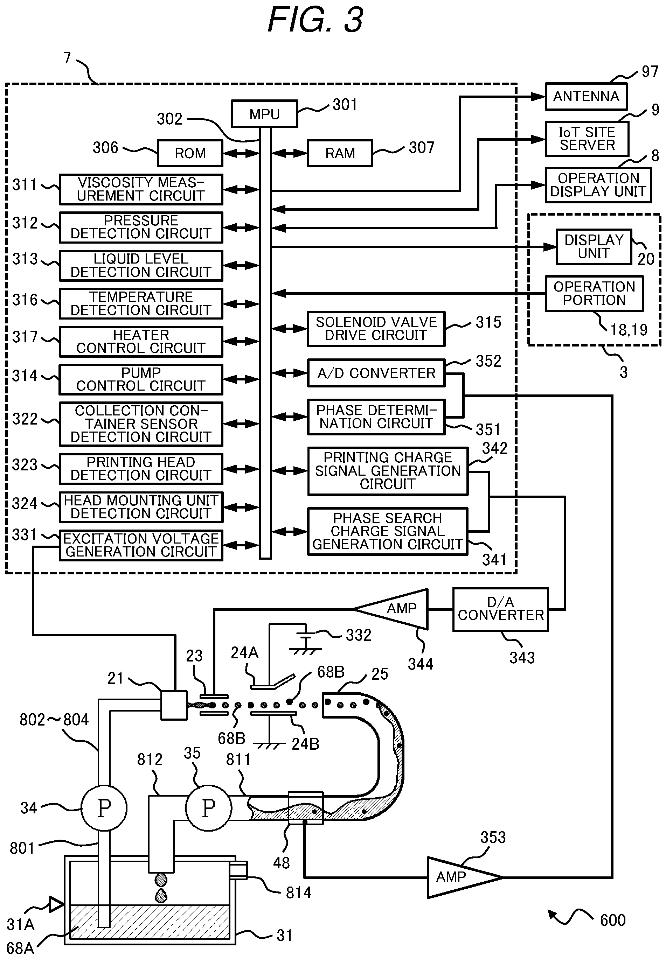

The solenoid valve (for viscosity measurement) 57 is configured to be connected to the pump (for circulation) 36 disposed in the path 822 via the confluence path 903. Thus, it is possible to circulate the ink 68A in the main ink container 31 and measure the viscosity of the ink 68A. The viscosity thus measured is input to the main body control unit 7 (not shown in Fig. 2, so see Fig. 3) to be used to control the viscosity of the ink 68A in the main ink container 31.

Next, a description will be given of solvent replenishment paths (paths 831 and 833) in the inkjet recording device 600 in the present embodiment. In Fig. 2, the main body 1 includes a solvent container 33 that holds the solvent 69A to be used for solvent replenishment to the main ink container 31, nozzle cleaning, or head cleaning. The solvent container 33 is connected at a portion thereof immersed in the solvent 69A to the path 831 and, in the path 831, a pump (for solvent) 37 is disposed to be used to suction and pressure-feed the solvent. The pump (for solvent) 37 is connected to a branched path 922 to change a destination of the supplied solvent 69A according to an object.

The branched path 922 is connected to a solenoid valve (for solvent replenishment) 53 to open and close the flow path disposed in the path 833 as the solvent replenishment path, and the solenoid valve (for solvent replenishment) 53 is configured to be connected to the main ink container 31. By using this path, under the control of the main body control unit 7, the viscosity of the ink 68A in the main ink container 31 is controlled.

Next, a description will be given of an ink replenishment path 806 in the inkjet recording device 600 in the present embodiment. In Fig. 2, in the main body 1, an auxiliary ink container 32 that holds ink 68C for replenishment is included. The auxiliary ink container 32 is connected at a portion thereof immersed in the ink 68C to the path 806.

To the path 806, a solenoid valve (for ink replenishment) 54 that opens and closes the path is connected, and the solenoid valve (for ink replenishment) 54 is connected via the confluence path 901 to the pump (for supply) 34 disposed in the path 801 and used to suction and pressure-feed the ink 68C. Then, the ink 68C in the auxiliary ink container 32 is replenished to the main ink container 31 via the nozzle 21, the gutter 25, the path 811, the solenoid valve 50, and the pump 35.

Next, a description will be given of the nozzle cleaning paths (paths 831 and 835) in the inkjet recording device 600 in the present embodiment. In Fig. 2, the pump (for solvent) 37 disposed in the path 831 is connected via the branched path 922 to the path 835. The path 835 is connected to a solenoid valve (for nozzle cleaning) 55 for opening and closing the flow path.

The solenoid valve (for nozzle cleaning) 55 is connected to a filter (for nozzle cleaning) 41 for removing a foreign substance mixed in the solvent 69A. The filter (for nozzle cleaning) 41 is included in the printing head 2 via the path 821 passing through the cable (for printing head) 5 and configured to be connected to the switch valve 26 for controlling whether or not to feed the solvent 69A for cleaning to the nozzle 21.

Next, a description will be given of main body circulation paths (paths 808 and 802) in the inkjet recording device 600 in the present embodiment. The path 802 is connected to the path 808 via the branched path 921. To the path 808, a solenoid valve (for main body circulation) 58 is connected to open and close the path, and the solenoid valve (for main body circulation) 58 is connected via the confluence path 902 to the pump (for circulation) 35 disposed in the path 802.

Next, a description will be given of head cleaning paths (paths 831 and 837) in the inkjet recording device 600 in the present embodiment. In Fig. 2, the pump (for solvent) 37 is connected to the path 837 via the branched path 922 and, in the path 837, a solenoid valve (for head cleaning) 56 for opening and closing the flow path is disposed. The solenoid valve (for head cleaning) 56 is connected to a filter (for head cleaning) 43 that removes the foreign substance mixed in the solvent 69A.

A filter (for head cleaning) 42 is included in the head mounting unit 3 via the path 822 passing through the cable (for head mounting unit) 6 and connected to the filter (for head cleaning) 43 to remove such a foreign substance as to be initially mixed in the path 837. To an output side of the filter (for head cleaning) 43, a cleaning nozzle 72 included inside a cleaning tank 71 of the head mounting unit 3 is connected. It is to be noted herein that an inner space of the cleaning tank 71 is configured to communicate with the collection container 4 disposed therebelow.

The collection container 4 is provided so as to store the solvent after cleaning with a cleaning liquid (solvent) ejected from the cleaning nozzle 72 grounded inside the cleaning tank 71. In the collection container 4, a float 74 is provided to sense a liquid level of the solvent after the cleaning. When the float 74 having an embedded magnet reaches a predetermined liquid level, a magnetic sensor A76 senses the liquid level and outputs reaching of the predetermined liquid level by the cleaning liquid in the collection container 4 to the main body control unit (not shown in Fig. 2).

Next, a description will be given of an air supply path (path 841) in the inkjet recording device 600 in the present embodiment. In Fig. 2, in the main body 1, a pump (for drying) 60 to be used to suction and pressure-feed air is included, and the pump (for drying) 60 forms an air suction port communicating with the inside of the main body 1. The pump (for drying) 60 is connected to an air supply nozzle 73 included inside the cleaning tank 71 of the head mounting unit 3 via the path 841 passing through the inside of the cable (for head mounting unit) 6.

Next, a description will be given of an air suction path (path 843) in the inkjet recording device 600 in the present embodiment. The cleaning tank 71 included in the head mounting unit 3 is connected to an air pump (for suction) 61 included in the main body 1 to be used to suction and pressure-feed air via the path 843 passing through the inside of the cable (for head mounting unit) 6. The pump (for suction) 61 is configured to be connected to the exhaust duct connection portion 62 communicating with the outside of the main body 1.

The inkjet recording device 600 also includes a temperature sensor D38 for checking a temperature inside the main body 1, a temperature sensor A27 for checking a temperature inside the printing head 2, a temperature sensor B80 for checking a temperature inside the head mounting unit 3, and a temperature sensor C30 to be used to control heating by the heater 29.

### <Configuration of Main Body Control Unit>

Next, a description will be given of a configuration of the main body control unit 7 of the inkjet recording device 600 in the present embodiment. Fig. 3 is a diagram illustrating a schematic configuration of the main body control unit 7 and a printing mechanism portion (the main body 1 and the printing head 2) of the inkjet recording device 600 in the present embodiment, which particularly illustrates flows of various information in the main body control unit 7.

In Fig. 3, a reference numeral 301 denotes a micro processing unit (hereinafter abbreviated as the MPU), which is a main component of the main body control unit that controls the entire inkjet recording device 600. A reference numeral 302 denotes a bus line having a function of transmitting data, a control signal, and the like between individual devices included in the main body control unit. For example, the bus line 302 is used to input data required for an arithmetic operation in the MPU 301, a sensing signal, and the like from each of the devices and transmit a data signal, an address signal, and a control signal to each of the devices.

A reference numeral 306 denotes a read only memory (ROM) that stores a control program required by the MPU 301 to operate and data. A reference numeral 307 denotes a rewritable memory (RAM) that temporarily stores data required by the MPU 301 during execution of the program. The reference numeral 8 denotes the operation display unit that receives details of the printing, a set value, and the like input thereto and displays the input data, the details of the printing, and the like. The operation display unit 8 uses herein a touch-input display panel obtained by superimposing a transparent touch switch on a surface of a liquid crystal display screen.

As also illustrated in Fig. 1, an operation portion (the start button 18 and the stop button 19) of the head mounting unit 3 is used when an operating action related to the head mounting unit 3 is performed not near the operation display unit 8, but near the head mounting unit 3. Meanwhile, the display unit 20 is used when an operating state, an abnormality message, or the like related to the head mounting unit 3 is checked not near the operation display unit 8, but near the head mounting unit 3.

Furthermore, a major feature of the present embodiment is that, as illustrated in Fig. 7 described later, it is possible to control the inkjet recording device 600 from the operation display unit (such as the start button, the stop button, the head cleaning button, and the power button) of the external control device 100. It is also a major feature to include an information display means (that can be regarded as a checking means with respect to the worker) that allows various operation information of the inkjet recording device 600 to be checked. Thus, with the external control device 100, it is possible to remotely perform maintenance management of the inkjet recording device 600.

The MPU 301 of the main body control unit 7 can be connected to the IoT site server 9 capable of wireless communication with the network 14 via the bus line 302. Alternatively, the MPU 301 of the main body control unit 7 can also be configured to be capable of wireless communication with the network 14 by using an antenna 97 instead of the IoT site server 9.

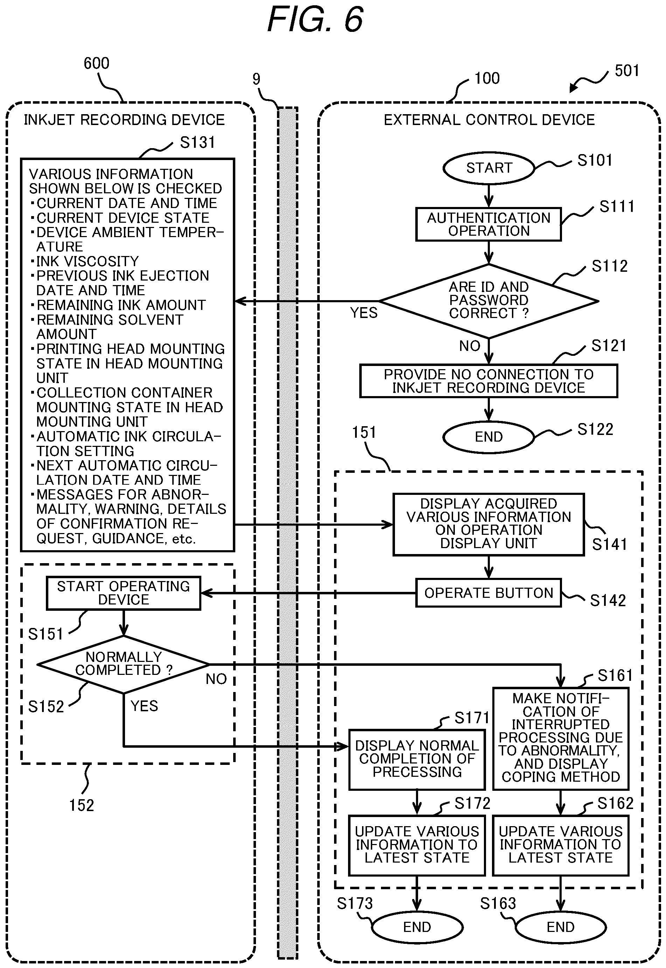

Thus, the main body control unit 7 has a function of a "transmission means" or "notification means" that transmits and receives, to and from the external control device 100, various information required for the maintenance management. It is to be noted herein that, as conditions required to execute the maintenance management of the inkjet recording device 600, among various information, "head mounting detection information" indicating that the printing head 2 is mounted and contained in the head mounting unit 3 and "ink ejection information" indicating that the ink is ejected from the nozzle 21 of the printing head 2 is transmitted from the transmission means to the external control device. Needless to say, as illustrated in Fig. 6 described later, in addition thereto, various information for performing the maintenance management is mutually transmitted.

The printing head 2 of the inkjet recording device 600 includes the nozzle 21 that particulates the ink 68A supplied under pressure from the main ink container 31 and ejects particles of the ink 68A. The nozzle 21 ejects the ink into a columnar shape a leading end of which is separated, and ejects the ink as the ink particles 68B. The printing head 2 includes the charging electrode 23 so as to surround the ink particles 68B and charges the ink particles 68B according to the details of the printing.

In addition, the printing head 2 deflects the ink particles 68B charged by the charging electrode 23 to fly according to the amount of charge and causes the ink particles 68B to fly toward a material to be printed (not shown). Then, the flying ink particles drip onto the material to printed to effect printing. The deflection electrode 24 of the printing head 2 is configured to include a ground electrode 24B and a positive electrode 24A.

In addition, the printing head 2 includes the gutter 25 that captures the ink particles 68B (unused ink) not used for the printing and the charge sensor 48 that generates a phase detection signal according to the amount of charge of the slightly charged ink particles 68B among the ink particles 68B captured by the gutter 25. Meanwhile, the main body 1 side includes the pump (for collection) 35 that collects the ink (ink particles) captured by the gutter 25 into the main ink container 31 and the ink collection paths 811 to 812 connecting the gutter 25 and the main ink container 31.

The main body control unit 7 has an excitation voltage generation circuit 331 that excites an electrostrictive element (not shown) embedded in the nozzle 21 to provide timing of separating the ink particles 68B from the ink column ejected from the nozzle 21 with regularity.

The main body control unit 7 also has a printing charge signal generation circuit 342, a phase search charge signal generation circuit 341, a D/A converter 343 for converting a charge signal in the form of a digital signal output therefrom to a voltage signal in the form of an analog signal, and an amplification circuit 344 that amplifies the voltage signal in the form of the analog signal output from the D/A converter 343 to generate a charging voltage to be applied to the charging electrode 23.

Note that, instead of using a configuration in which the printing charge signal generation circuit 342 and the phase search charge signal generated circuit 341 are provided, it may also be possible to use only the printing charge signal generation circuit 342 and implement the generation of the charge signal through the control of the amount of charge by the main body control unit. The inkjet recording device 600 also includes a deflection voltage generation circuit 332 that generates a deflection voltage to be applied to the deflection electrode 24.

In addition, the inkjet recording device 600 includes an amplification circuit 353 that amplifies a phase detection signal in the form of an analog signal output from the charge sensor 48, a phase determination circuit 351 that receives the amplified phase detection signal input thereto and determines whether or not charging is successful, and an A/D converter 352 that receives the amplified phase detection signal input thereto and performs A/D conversion thereon.

In Fig. 3, the MPU 301 of the main body control unit 7 is connected, via the bus line 302, to each of a liquid level detection circuit 313 for managing a liquid level in the main ink container 31, a pressure detection circuit 312 for detecting whether or not a pressure of the ink to be supplied to the nozzle 21 has an appropriate value, the viscosity measurement circuit 311 for measuring whether or not a viscosity of the ink 68A to be supplied to the nozzle 21 has a value appropriate for printing by using the viscosity meter 45, a pump control circuit 314 for controlling each of the pumps 34 to 37 and 60 to 61 arranged in the main body 1 to suction and pressure-feed the ink 68A, the solvent 69A, and the air, a solenoid valve drive circuit 315 for controlling an opening/closing operation of each of the solenoid valves 49 to 50 and 53 to 59 in the individual paths, a temperature detection circuit 316 for checking whether or not the temperatures detected by the temperature sensor A27, the temperature sensor B80, the temperature sensor C30, and the temperature sensor D38 are in appropriate ranges, and a heater control circuit 317 for controlling heating on the basis of detection results from the temperature sensor A27 and the temperature sensor C30.

The MPU 301 is also connected via the bus line 302 to each of a collection container sensor detection circuit 322 for detecting that the collection container 4 is mounted in the head mounting unit 3 and that the cleaning liquid in the collection container 4 is not larger in amount than a predetermined value by using the magnetic sensor A76 and a magnet A75, a printing head detection circuit 323 having a configuration for detecting that the printing head 2 is mounted in the head mounting unit 3 on the head mounting unit 3 side by using a magnetic sensor B84 and a magnet B86, and a head mounting unit detection circuit 324 for detecting that the printing head 2 is mounted in the head mounting unit 3 on the printing head 2 side by using a magnetic sensor C28 and a magnet C87 to control each of the portions.

Note that the main body control unit 7 can use a computer. Specifically, the main body control unit 7 can be configured to include the MPU 301, a program for an operation of the MPU 301, memories (306 and 307) storing therein data/information required for the operation, and a drive unit that operates the printing head 2, the head mounting unit 3, and constituent devices inside the main body 1 according to an instruction from the MPU 301. A detailed description of the main body control unit 7 is omitted herein.

### <Configuration of Head Mounting Unit>

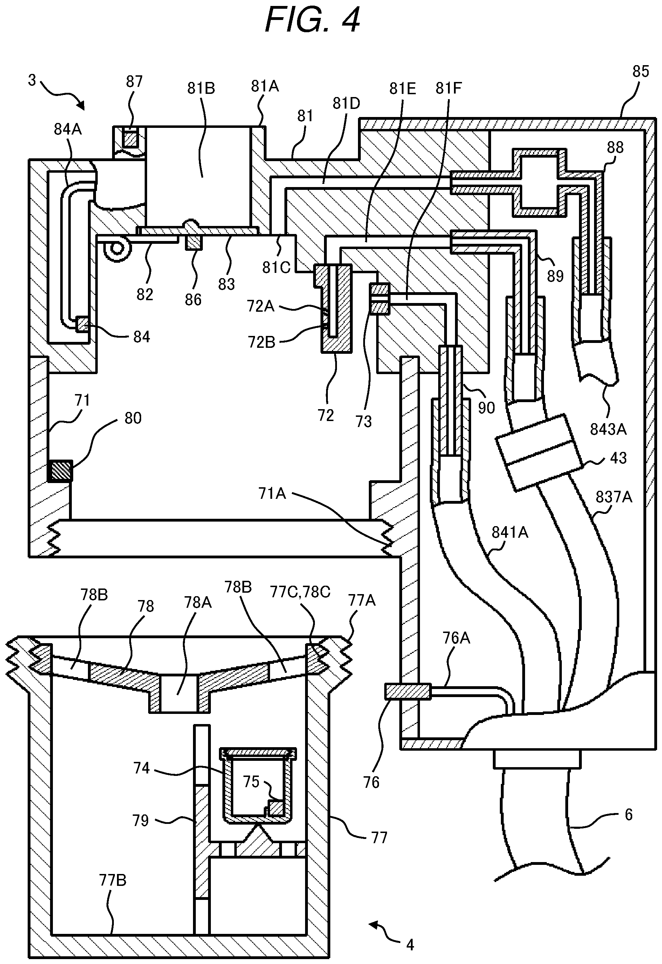

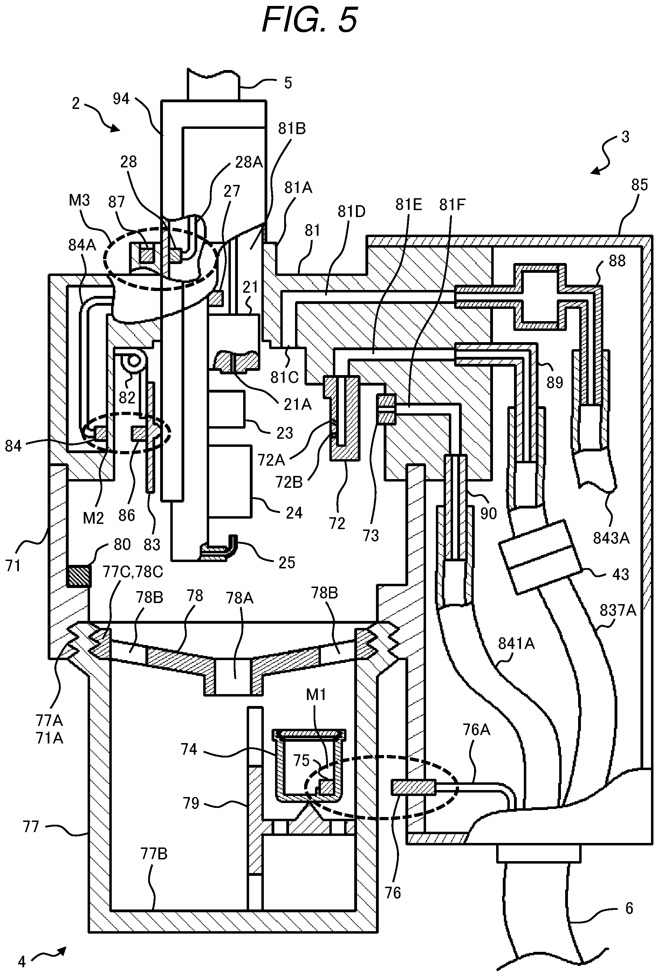

Next, referring to Fig. 4 to Fig. 5, a description will be given of a detailed configuration of the head mounting unit 3 of the inkjet recording device 600 in the present embodiment. Fig. 4 is a diagram illustrating the configuration in a state where, in the head mounting unit 3, the collection container 4 is detached. Fig. 5 is a diagram illustrating a state where, in the head mounting unit 3, the collection container 4 and the printing head 2 are mounted.

First, referring to Fig. 4, the configuration of the head mounting unit will be described. In Fig. 4, the head mounting unit 3 includes the cleaning tank 71 in which the printing head 2 is mounted during the head cleaning and a cleaning block 81 configured to include the head mounting portion 81A disposed in an upper portion of the cleaning tank 71 to mount the printing head 2 in the head mounting unit 3 and a head insertion portion 81B serving as an inlet port when the printing head 2 is inserted into the cleaning tank 71. A lower portion of the cleaning tank 71 is configured to allow the collection container 4 for containing the cleaning liquid used for the head cleaning processing to be mounted therein.

To the cleaning block 81, a lid member 83 is assembled so as to prevent a foreign substance such as dust from entering the inside of the cleaning tank 71 from the head insertion portion 81B, which is an opening portion, when the printing head 2 is not mounted in the head insertion portion 81B. The lid member 83 is assembled to the cleaning block 81 via a lid hinge 82. To the lid member 83, the magnet B86 to be used when the mounting of the printing head 2 in the head mounting unit 3 is detected is assembled.

To the cleaning block 81, the magnetic sensor B84 for detecting that the magnet B86 has approached within a given distance when the printing head 2 is mounted in the head mounting unit 3 is assembled. In addition, to the cleaning block 81, the magnet C87 to be used when the mounting of the printing head 2 in the head mounting unit 3 is detected is also assembled.

Furthermore, to the cleaning block 81, the cleaning nozzle 72 for ejecting the head cleaning solvent 69A toward the printing head 2 and the supply nozzle 73 having an air ejection port for blowing air for drying the printing head 2 wet with the solvent 69A after the head cleaning are assembled by a press-fitting process.

The cleaning nozzle 72 is formed with a liquid ejection port A portion 72A for ejecting the solvent 69A in such a manner as to aim at the nozzle 21 assembled to the printing head 2 and with a liquid ejection port B portion 72B for ejecting the solvent 69A in such a manner as to aim at the deflection electrode 24. Then, the cleaning nozzle 72 is connected to a flow path B portion 81E formed in the cleaning block 81.

The air supply nozzle 73 is formed with the air ejection port for ejecting the air in such a manner as to aim at an inter-electrode space of the charging electrode 23 assembled to the printing head 2. The air supply nozzle 73 is configured to be connected to a flow path C portion 81F formed in the cleaning block 81. The cleaning block 81 is further formed with a hole portion 81C communicating with the inside of the cleaning tank 71 in which the printing head 2 is to be inserted during the head cleaning and with a flow path A portion 81D connected to the hole portion 81C.

The head mounting unit 3 includes, in a lower portion of the cleaning block 81, the cleaning tank 71 for containing the printing head 2 during the head cleaning. The cleaning tank 71 is formed with a side wall portion formed so as to prevent the solvent 69A ejected from the cleaning nozzle 72 from splashing around and with an attachment portion 71A to be used when the collection container 4 is to be mounted. To the inside of the cleaning tank 71, the temperature sensor B80 for sensing an ambient temperature around the head mounting unit 3 and using the sensed temperature for various control is assembled. In addition, to the cleaning tank 71, the magnetic sensor A76 for detecting that the collection container 4 is attached to the head mounting unit 3 is assembled.

Meanwhile, the collection container 4 configured to be mountable in the lower portion of the cleaning tank 71 is configured to include a container 77 for containing the cleaning liquid, a partition 78 attached to reduce splashing of the cleaning liquid when the collection container 4 is carried, the float 74 to which the magnet A75 is assembled, and a holder 79 that inhibits movement of the float 74.

By rotating the collection container 4 thus configured by about 90° in a state where the collection container 4 is mounted in the head mounting unit 3, the attachment portion 71A of the head mounting unit 3 and an attachment portion 77A of the collection container 4 that fits therewith are brought into a detached state, and the collection container 4 can be separated from the head mounting unit 3.

In this state, the magnet A75 assembled to the inside of the float 74 and the magnetic sensor A76 assembled to the cleaning tank 71 are apart from each other by a given distance (distance at which the magnetic sensor A76 no longer recognizes the magnet A75) or longer. This state is transmitted to the main body control unit 7 via an electric wire 76A. This allows the main body control unit 7 to recognize the detachment of the collection container 4 from the head mounting unit 3.

The container 77 is formed with a liquid reservoir 77B for containing the cleaning liquid used for the head cleaning processing, the attachment portion 77A to be used when the container 77 is fixed to the cleaning tank 71, and an inner threaded portion 77C for attaching the partition 78. The partition 78 is formed with a liquid flow-in port portion 78A provided to allow the cleaning liquid dripping from the cleaning tank 71 to flow into the container 77 and a liquid flow-out port portion 78B provided to allow the cleaning liquid to flow out of the container 77 when the collection container 4 is tilted.

To the cleaning block 81, a liquid joint 89 connected to the flow path B portion 81E is assembled and, to the liquid joint 89, a tube 837A is connected by a method such as press-fitting. The tube 837A forms a portion of the head cleaning path 837 to be connected to the solvent container 33 inside the main body 1 via the tube 837A.

To the cleaning block 81, an air joint 90 connected to the flow path C portion 81F is assembled and, to the air joint 90, a tube 841A is connected by a method such as press-fitting. The tube 841A forms a portion of the path (for air supply) 841, which is connected to the pump (for drying) 60 via the tube 841A.

To the cleaning block 81, a suction joint 88 connected to the flow path A portion 81D is assembled and, to the suction joint 88, a tube 843A is connected by a method such as press-fitting. The tube 841A forms a portion of the path (for air suction) 841, which is connected to the pump (for suction) 61 via the tube 841A.

The head mounting unit 3 is covered with a cover 85 such that the tube 837A, the tube 841A, and the tube 843A are not exposed to the outside of the head mounting unit 3, and the cover 85 is fixed so as to hold the upper portion of the cleaning block 81 and the lower portion of the cleaning tank 71 in between.

The cable (for head mounting unit) 6 is assembled to a lower portion of the cover 85 so as not to protrude to the outside and interfere with another production equipment. The cable (for head mounting unit) 6 is configured to allow not only the tube 837A, the tube 841A, and the tube 843A, but also the electric wire 76A connected to the magnetic sensor A76, the electric wire 84A connected to the magnetic sensor B84, an electric wire connected to the temperature sensor B80, a harness (not shown) for operating the start button 18, the stop button 19, and the display unit 20, and the like to pass through the inside thereof and connect the head mounting unit 3 and the main body 1.

Next, referring to Fig. 5, a description will be given of a state where the printing head 2 and the collection container 4 are mounted in the head mounting unit 3. The lid member 83 of the head mounting unit 3 is opened by inserting the printing head 2, from which the protection cover 95 has been removed, into the head insertion portion 81B. The printing head 2 is in a state reached as a result of being pushed in to a position where the nozzle 21, the charging electrode 23, the deflection electrode 24, and the gutter 25 come into a space surrounded by the cleaning tank 71 and the cleaning block 81.

The head mounting unit 3 is adapted such that an inner wall surface of the hole of the head insertion portion 81B fits with an outer wall surface of the head base 94 of the printing head 2 such that a position thereof relative to the printing head 2 is not displaced from left to right and from front to back. In addition, the printing head 2 comes to rest at a position where a portion thereof abuts against the head mounting portion 81A formed in the cleaning block 81 to stabilize a position when the printing head 2 is mounted in the head mounting unit 3.

Meanwhile, to the printing head 2 in the present embodiment, the magnetic sensor C28 and the temperature sensor A27 are assembled. The electric wire 28A connected to the magnetic sensor C28 and an electric wire 27A connected to the temperature sensor A27 are connected to the main body control unit 7 disposed in the main body 1 through the inside of the cable (for printing head) 5.

In a state where the printing head 2 is mounted in the head mounting unit 3, the lid member 83 is opened by the printing head 2 to also move the magnet B86 assembled to the lid member 83 in conjunction therewith and, as indicated by a surrounding dotted circle (M2), the magnet B86 and the magnetic sensor B84 approach each other within a given distance. This allows the head mounting unit 3 side to recognize that a state where the printing head 2 is mounted in the head mounting unit 3 is reached.

In the state where the printing head 2 is mounted in the head mounting unit 3, as indicated by a surrounding dotted circle (M3), the magnet C87 assembled to the cleaning block 81 and the magnetic sensor C28 assembled to the printing head 2 approach each other within the given distance to allow even the printing head 2 side to recognize that the state where the printing head 2 is mounted in the head mounting unit 3 is reached.

By thus checking whether or not the state where the printing head 2 is mounted in the head mounting unit 3 is reached by using the two sensors, erroneous detection due to a component failure or the like is prevented.

Additionally, in a state where the collection container 4 is mounted in the head mounting unit 3, as indicated by a surrounding dotted circle (M1), the magnet A75 assembled to the float 74 of the collection container 4 and the magnetic sensor A76 assembled to the cleaning tank 71 of the head mounting unit approach each other within a given distance. The magnetic sensor A76 senses this state to allow the main body control unit 7 to recognize that the collection container 4 is mounted in the head mounting unit 3. The sensing can prevent such an erroneous operation as to start the head cleaning processing without mounting the collection container 4.

Note that, in the present embodiment, the cleaning nozzle is configured to be provided in the head mounting unit, but it is also possible to use another configuration in which a portion of the printing head 2 has the same function, and it may be possible to use an appropriate configuration as required.

### <Description of Remote Monitoring/Operation Processing Flow and Details of Screen Display>

Next, referring to Fig. 6 to Fig. 7, a description will be given of a processing flow of remote monitoring/operation of executing maintenance management of the inkjet recording system 501 in the present embodiment. Fig. 6 is a diagram illustrating a flow of processing of an operation and monitoring in the inkjet recording system 501. Fig. 7 is a diagram illustrating an operation and monitoring screen displayed on the external control device 100.

First, referring to Fig. 6, a description will be given of flows of operation processing and monitoring processing for maintenance management of the inkjet recording system 501 in the present embodiment. Fig. 6 illustrates a state of communication among the inkjet recording device 600, the IoT site server 9, and the external control device 100.

### <<Step S101>>

In Step S101 in the external control device in Fig. 6, the external control device 100 is operated (remotely operated) to start connection start processing for communication between the external control device 100 and the inkjet recording device 600. When this is completed, the processing moves to Step S111.

### <<Step S111>>

In Step S111, an ID and a password which are required for connection between the external control device 100 and the inkjet recording device 600 are input to the external control device 100. When this is completed, the processing then moves to Step S112.

### <<Step S112>>

In Step S112, the ID and the password which are input in Step S111 are compared to and cross-checked against a correct ID and a correct password which are recorded in advance in the IoT site server 9, and it is determined whether or not the input ID and password are correct (YES/NO).

Then, when it is determined that the input ID and password are correct (YES), a list including a device management number 122 (see Fig. 7) of the inkjet recording device 600 registered in the ID is displayed and, when the device management number 122 intended to be confirmed is selected, the external control device 100 and the inkjet recording device 600 start to communicate with each other, and the processing moves to Step S131. When it is determined that the input ID and password are not correct (NO), the processing moves to Step S121.

### <<Step S121>>

In Step S121, a message indicating that either of the ID and password input in Step S111 is not correct is displayed on the external control device 100. When this is completed, the processing then moves to S122.

### <<Step S122>>

Since the ID or password input in Step S111 is not correct, in Step S122, the connection start processing for the communication between the external control device 100 and the inkjet recording device 600 is ended.

### <<Step S131>>

Since the ID and password input in Step S111 are correct, in Step S131, various information (operation data) of the inkjet recording device 600 is acquired and transmitted to the external control device 100 via the IoT site server 9. Examples of the various information mentioned herein are
(1) Current date and time (Date and time information) (at timing with which the data is acquired),
(2) Current device state (operation information of the printing head),
(3) Device ambient temperature (temperature information),
(4) Ink viscosity (viscosity information),
(5) Previous ink ejection date and time (date and time information),
(6) Remaining ink amount (remaining ink amount information),
(7) Remaining solvent amount (remaining solvent amount information),
(8) Printing head mounting state in head mounting unit (head mounting detection information),
(9) Collection container mounting state in head mounting unit (collection container mounting information),
(10) Automatic ink circulation setting (ink circulation setting information),
(11) Next automatic circulation date and time (date and time information),
(12) Abnormality/warning/notification (abnormality information and warning information/message information such as details of a confirmation request and guidance.
When this is completed, the processing then moves to Step S141.

### <<Step S141>>

In Step S141, the various data acquired from the inkjet recording device 600 is displayed on the operation display unit 101 (see Fig. 7) of the external control device 100. When this is completed, the processing then moves to Step S142.

### <<Step S142>>

In Step S142, a required button operation is performed on the basis of the information displayed in Step S141, and an instruction to start the operation for the maintenance management is given to the inkjet recording device 600. The operation is started on the condition that the printing head 2 is mounted and contained in the head mounting unit 3. Accordingly, "head mounting detection information" indicating that the printing head is mounted in the head mounting unit 3 and described in claims is received from the main body control unit 7. When this is completed, the processing then moves to Step S151.

### «Step S151»

In the inkjet recording device 600, in Step S151, the inkjet recording device 600 is operated on the basis of the instruction given in Step S142. When this is completed, the processing then moves to Step S152.

### «Step S152»

In Step S152, it is determined whether or not the processing in Step S151 is normally completed (YES/NO). When it is determined that the processing in Step S151 is not normally completed (NO), the processing moves to Step S161 while, when it is determined that the processing in Step S161 is normally completed (YES), the processing moves to Step S171.

### «Step S161»

In Step S161, the operation display unit 101 of the external control device 100 is notified that operation start processing for the inkjet recording device 600 was abnormally interrupted on the basis of the result in Step S152, while a method of coping with the abnormality is displayed. When this is completed, the processing then moves to Step S162.

### «Step S162», «Step S163»

Then, in Step S162, the various information including an abnormality message is updated to a latest state. Then, the processing moves to Step S163 and is ended in Step S163.

### «Step S171»

After returning of the processing to Step S152, when "YES" is given as a result of determination, in Step S171, the operation display unit 101 of the external control device 100 is notified that the operation starting processing in the inkjet recording device 600 was normally completed on the basis of the result in Step S152. When this is completed, the processing then moves to Step S172.

### «Step S172», «Step S173»

In Step S172, the various information is updated to the latest state, and the processing moves to Step S173 and is ended in Step S173.

A broken line frame 151 defined by a surrounding dotted line in Fig. 6 indicates control related to remote state monitoring/operation in the external control device 100. Meanwhile, a broken line frame 152 defined by a surrounding dotted line indicates control related to remote operation in the inkjet recording device 600.

Next, referring to Fig. 7, a description will be given of an operation and monitoring screen which is displayed on the external control device 100 in the present embodiment. As the external control device 100 in Fig. 7, a smartphone 16 is used by way of example but, besides, a tablet 17, a personal computer 15, or the like can also be used.

The external control device 100 in Fig. 7 includes the operation display unit 101 using a touch-input display panel. Through a touch operation of the operation display unit 101 by an operator, it is possible to perform state recognition and remote operation on the inkjet recording device 600. When the personal computer 15 is used as the external control device 100, by operating a keyboard, a mouse, and a touch pad, it is possible to perform the state recognition and remote operation on the inkjet recording device 600.

The screen for operating the inkjet recording device 600 illustrated in Fig. 7 can be displayed by installing dedicated application software to the external control device 100 or accessing a dedicated Web address (URL). Remote monitoring and a remote operation can be performed by using, e.g., a typical tablet or personal computer to activate a remote operation/monitoring application of the inkjet recording device 600 and displaying the screen illustrated in Fig. 7. It is to be noted herein that the displayed information illustrated in Fig. 7 can be checked by the worker, and can therefore be regarded as a checking means.

The operation display unit 101 displays
(1) Current date and time 111 (date and time checking means),
(2) Current device state 113 (ink ejection checking means),
(3) Device ambient temperature 114 (temperature checking means),
(4) Ink viscosity 115 (ink viscosity checking means),
(5) previous ink ejection time and data 112 (ejection date and time checking means),
(6) Remaining ink amount 116 (remaining ink amount checking means),
(7) Remaining solvent amount 117 (remaining solvent amount checking means),
(8) Head mounting state 118 in head mounting unit (head mounting checking means),
(9) Collection container mounting state 119 in head mounting unit (collection container mounting checking means),
(10) Automatic ink circulation setting 120 (ink circulation checking means)
(11) Next circulation date and time 121 (ink circulation date and time checking means),
(12) Message display area 131 (message checking means)
(13) Ink ejection start button 141,
(14) Ink stop button 142,
(15) Head cleaning start button 143,
(16) Power OFF button 144,
(17) Device management number 122,
and the like. The following will describe details thereof.

(1) The current date and time 111 displays the current date and time 111 managed by the main body control unit 7 of the inkjet recording device 600.
(2) In the current device state 113, character strings representing "SUSPENDED, DURING INK EJECTION, DURING PRINTING, UNKNOWN (DISCONNECTED)" are displayed in respective surrounding frames on the basis of "ink ejection information" described in the claims, and any of the character strings is displayed in a dark color. This allows whether or not the ink is ejected to be checked, and a function of an "ink ejection checking means" described in the claims is provided. In Fig. 7, "SUSPENDED" is displayed in the dark color, which indicates a state where the inkjet recording device 600 is turned ON, and the ink particles 68B are not ejected from the nozzle 21.

If the "DURING INK EJECTION" is displayed in the dark color, a state is indicated in which the ink particles 68B are ejected from the nozzle 21, but such printing control as described with the inkjet recording device 600A in Fig. 1 is not performed.

Meanwhile, when "DURING PRINTING" is displayed in the dark color, a state is indicated in which the ink particles 68B are ejected from the nozzle 21 and the printing control is performed.

When the "UNKNOWN (DISCONNECTED)" is displayed in the dark color, the display indicates that it is unknown which one of the states of the "SUSPENDED", "DURING INK EJECTION", and "DURING PRINTING" is established because a main power source of the inkjet recording device 600 is not turned ON or at least one of the inkjet recording device 600 and the IoT site server 9 is not connected to the network 14.

(3) The device ambient temperature 114 displays a temperature detected by the temperature sensor A27 disposed in the printing head 2 of the inkjet recording device 600. In Fig. 7, the device ambient temperature 114 is displayed, but it may also be possible to display a temperature detected by the temperature sensor B80 disposed in the head mounting unit 3 or a device internal temperature detected by the temperature sensor D38 disposed in the main body 1 on the external control device 100.

(4) The ink viscosity 115 displays a result of latest ink viscosity measurement performed by the viscosity meter 45 of the inkjet recording device 600.

(5) The previous ink ejection date and time 112 displays a date and time when the ink particles 68B were ejected last from the nozzle 21 within a range that can be confirmed when the current device state 113 is "SUSPENDED" or "UNKNOWN (DISCONNECTED)". In the inkjet recording device 600, when a period during which the ink is not ejected from the nozzle 21 is elongated, the ink 68A in the path may dry out and stick. To prevent such trouble, when it could not be confirmed that the ink particles 68B were ejected from the nozzle 21 at least once within a given period (e.g., one week) or longer, an alert message is displayed on the message display area 131.

(6) The remaining ink amount 116 stepwise displays an amount of the remaining ink 68C on the basis of a detection result from a liquid amount sensor provided in the auxiliary ink container 32 of the inkjet recording device 600.

(7) The remaining solvent amount 117 stepwise displays an amount of the remaining solvent 69A on the basis of a detection result from the liquid amount sensor provided in the solvent container 33 of the inkjet recording device 600. When the amount of the remaining ink 68C or the amount of the remaining solvent 69A becomes less than a given value, caution and a message to encourage replenishment of the ink 68 or the solvent 69A are displayed on the message display area 131.

(8) In the printing head mounting state 118 in the head mounting unit, character strings "PRINTING HEAD IS MOUNTED, PRINTING HEAD IS NOT MOUNTED" are displayed in respective surrounding frames, and either of the character strings is displayed in a dark color. In Fig. 7, the "PRINTING HEAD IS MOUNTED" is displayed in the dark color, which indicates that a state where the printing head 2 of the inkjet recording device 600 is mounted in the head mounting unit 3 is reached.

When the printing head 2 is not mounted in the head mounting unit 3, the "PRINTING HEAD IS NOT MOUNTED" is displayed in the dark color. Note that whether or not the printing head 2 is mounted in the head mounting unit 3 is determined by the printing head detection circuit 323 and the head mounting unit detection circuit 324. The two detection circuits are provided herein to reliably detect a failure.

(9) In the collection container mounting state 119 in the head mounting unit, character strings "WITH COLLECTION CONTAINER, WITHOUT COLLECTION CONTAINER" are displayed in respective surrounding frames, and either of the character strings is displayed in a dark color. In Fig. 7, "WITH COLLECTION CONTAINER" is displayed in the dark color, which indicates that a state where the collection container 4 of the inkjet recording device 600 is mounted in the head mounting unit 3 is reached.

If the collection container 4 is not mounted in the head mounting unit 3, "WITHOUT COLLECTION CONTAINER" is displayed in the dark color. Note that whether or not the collection container 4 is mounted in the head mounting unit 3 is determined by the collection container sensor detection circuit 322.

(10) The automatic ink circulation setting 120 allows either one of the OFF button and the ON button to be selected, and displays the currently selected button in a dark color. In Fig. 7, the OFF button is selected and, in this case, automatic ink circulation is not performed. In a case of selecting the ON button, any number can be input to "AUTOMATIC CIRCULATION CYCLE: ○ DAYS". For example, when "7" is input to "_", the inkjet recording device 600 performs control of automatically repeating an operation in a procedure (a) to (d) which proceeds in order of (a) INK EJECTION START, (b) INK CIRCULATION, (c) INK STOP, and (d) 7-DAY PAUSE.

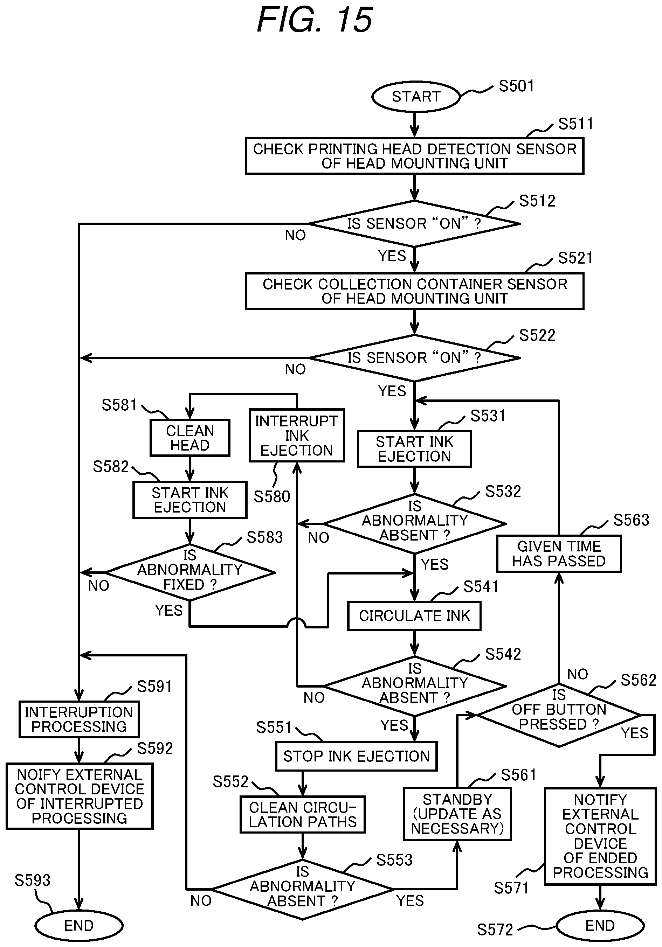

By making such settings, the inkjet recording device 600 can prevent trouble resulting from sticking of the ink in the path. The operation in the procedure (a) to (d) causes the nozzle 21 to eject the ink particles 68B, and therefore the date and time of this operation is reflected in the display of the previous ink ejection date and time 112. When the automatic ink circulation setting 120 is turned ON, a scheduled date and time when (a) INK EJECTION START is to be performed next is displayed in the (11) Next circulation date and time 121 described above. When the automatic ink circulation setting 120 is turned ON, control when the automatic ink circulation setting illustrated in Fig. 15 is made is performed.

(12) On the message display area 131, the abnormality information, the warning information, the details of the confirmation request, the guidance, or the like is displayed in a text format. As a result, when there is, e.g., an abnormality, it is possible to contact the worker with a request for a specific action.

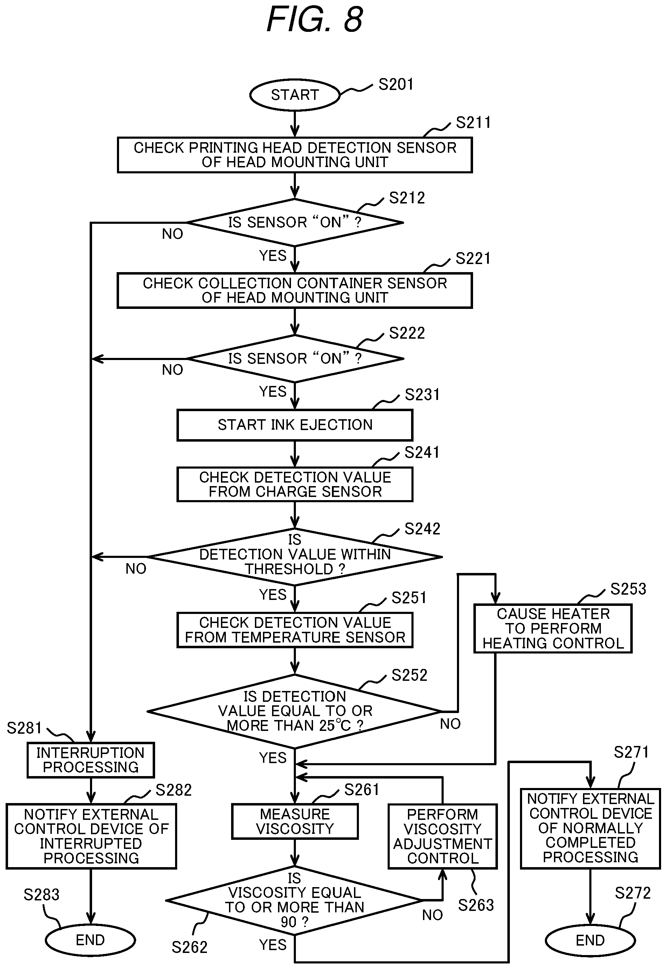

(13) The ink ejection start button 141 is executable under AND conditions that (a) the current device state 113 displays "SUSPENDED", (b) the printing head mounting state 118 in the head mounting unit is "HEAD IS MOUNTED", and (c) the collection container mounting state 119 in the head mounting unit is "WITH COLLECTION CONTAINER". When the ink ejection start button 141 is operated (pushed), the operation start processing illustrated in Fig. 8 is performed.

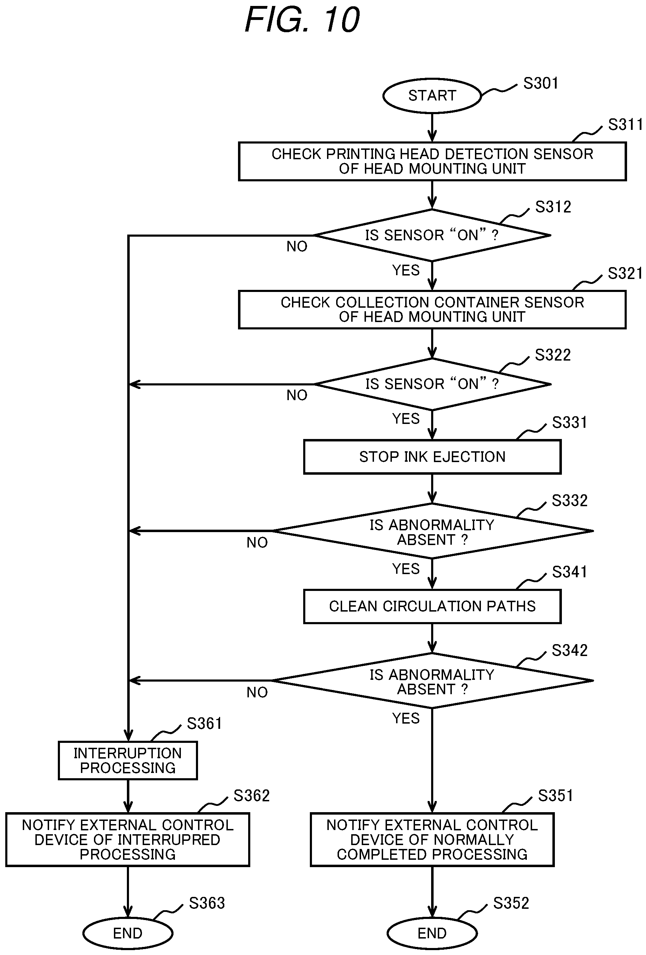

(14) The ink stop button 142 is executable under AND conditions that (a) the current device state 113 displays "STANDBY", (b) the printing head mounting state 118 in the head mounting unit displays "HEAD IS MOUNTED", and (b) the collection container mounting state 119 is "WITH COLLECTION CONTAINER". When the ink stop button 142 is operated (pushed), the operation stop processing illustrated in Fig. 10 is performed.

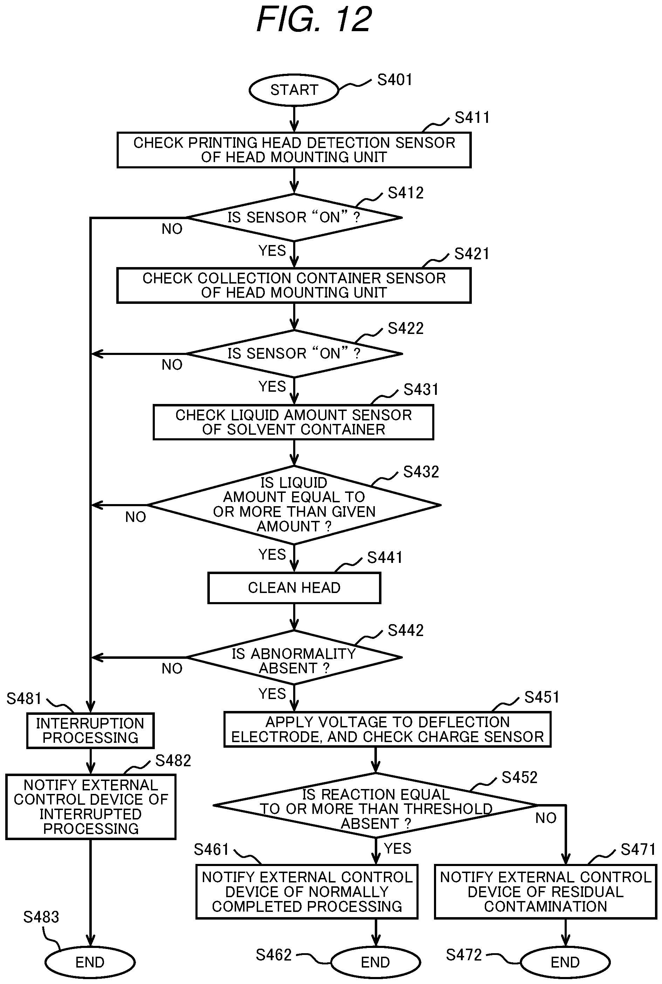

(15) The head cleaning start button 143 is executable under AND conditions that (a) the current device state 113 displays "SUSPENDED", (b) the remaining solvent amount 117 is equal to or more than a given amount, (c) the printing head mounting state 118 in the head mounting unit displays "HEAD IS MOUNTED", and (d) the collection container mounting state 119 in the head mounting unit displays "WITH COLLECTION CONTAINER". When the head cleaning start button 143 is operated (pushed), the head cleaning processing illustrated in Fig. 12 is performed.

(16) The power OFF button 144 is executable under a condition that the current device state 113 displays "SUSPENDED". When the power OFF button 144 is operated (pushed), the power of the inkjet recording device 600 is disconnected.

(17) The device management number 122 displays a number specifying the inkjet recording device 600 to be subjected to a remote operation with the external control device 100.

### <Description of Operation Start Processing Flow>

Next, referring to Figs. 8 to 9, a description will be given of a flow of control processing when, in the inkjet recording system 501 according to the present embodiment, the operation of the inkjet recording device 600 is to be started by operating the external control device 100.

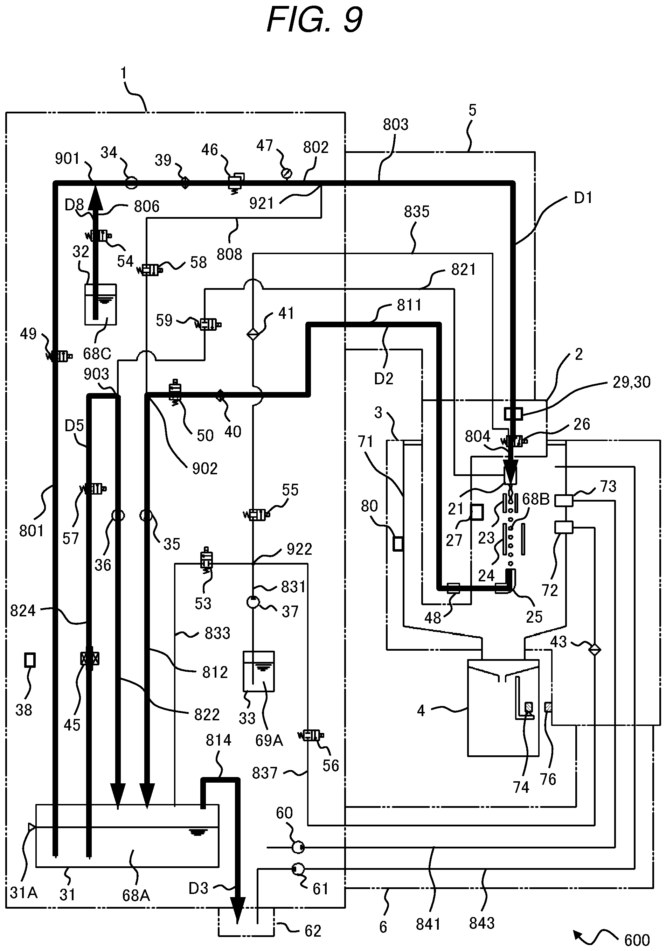

Fig. 8 is a flow chart diagram of the operation start (ink ejection start) processing for the inkjet recording device 600 in the present embodiment. Fig. 9 is a fluid path diagram in which flows of an ink liquid and air when the inkjet recording device 600 in the present embodiment is in a state when the printing head 2 is mounted in the head mounting unit 3 and the operation is started (ink is ejected) are indicated by thick lines (D1 to D3, D5, and D8) .

### «Step S201»

In Step S201, the ink ejection start button 141 for performing the operation start processing displayed on the external control device 100 is operated (pushed). A condition for the start button for performing the operation start (ink ejection start) processing to be enabled is that the inkjet recording device 600 has stopped the ink ejection from the nozzle 21 of the printing head 2 and ink circulation system components such as the pump (for supply) 34 and the solenoid valve (for supply) 49 are not supplied with power and are in a non-operating state. When this is completed, the processing then moves to Step S211.

### «Step S211»

In Step S211, it is checked whether or not the magnetic sensor B84 of the head mounting unit 3 is in an "ON" state (the magnet B86 assembled to the lid member 83 is detected), and it is checked whether or not the magnetic sensor C28 of the printing head 2 is in the "ON" state (the magnet C87 assembled to the cleaning block 81 is detected). When this is completed, the processing then moves to Step S212.

### «Step S212»

In Step S212, when the magnetic sensor B84 is in the "ON" state and the magnetic sensor C28 is in the "ON" state in results of the checking in Step S211, "YES" is given as a result of determination (that the printing head 2 is mounted in the head mounting unit 3), and the processing moves to Step S221. In the results of the checking in Step S211, when either the magnetic sensor B84 or the magnetic sensor C28 is in an "OFF" state, "NO" is given as a result of determination (that the printing head 2 is not mounted in the head mounting unit 3), and the processing moves to interruption processing in Step S281.

The result of the determination in Step S212 is used as the "head mounting detection information" described in the claims. The "head mounting detection information" is transmitted by a "head mounting detection notification means" serving as the transmission means to the external control device 100.

### «Step S221»

In Step S221, it is checked whether or not the magnetic sensor A76 of the head mounting unit 3 is in the "ON" state (the magnet A75 of the collection container 4 is detected). When this is completed, the processing then moves to S222.

### «Step S222»

In Step S222, when the magnetic sensor A76 is in the "ON" state in a result of the checking in Step S221, "YES" is given as a result of determination (that the collection container 4 is mounted in (attached to) the head mounting unit 3), and the processing moves to Step S231.

Meanwhile, when the magnetic sensor A76 is in the "OFF" state in the result of the checking in Step S221, "NO" is given as a result of determination (that the collection container 4 is not mounted in the head mounting unit 3 or the liquid 70 is stored in the collection container 4, and the float 74 is in a floating state) in S222, and the processing moves to the interruption processing in Step S281.

The result of the determination in Step S222 is used as "collection container mounting information" described in the claims. The "collection container mounting information" is transmitted by a "collection container mounting notification means" serving as the transmission means to the external control device 100.

### «Step S231»

Next, in Step S231, the ejection of the ink particles 68B from the nozzle 21 is started. Referring to Fig. 9, a description will be given of the operation.

In the ink supply paths (paths 801 to 804) in Fig. 9, the solenoid valve (for supply) 49 is energized to open the flow path, and the switch valve 26 is energized to bring the ink supply paths into a state connected to the nozzle 21 and, by operating the pump (for supply) 34, as indicated by the thick line of the arrow D1, the ink 68A contained in the main ink container 31 of the main body 1 is supplied to the nozzle 21 of the printing head 2 and ejected as the ink particles 68B from the nozzle 21.

Meanwhile, in the ink collection paths 811 to 812 in Fig. 9, the solenoid valve (for collection) 50 is energized to open the flow path and, by operating the pump (for collection) 35, as indicated by the thick line of the arrow D2, the ink particles 68B and air (ambient atmosphere) around the printing head 2 are suctioned from the gutter 25, and suctioned and press-fed into the main ink container 31 of the main body 1.

In the ink collection paths 811 to 812, the ink 68A and the air flow in a gas-liquid mixture state, and consequently a solvent component of the ink 68A is dissolved in the air, and the air becomes a solvent gas and flows into the main ink container 31. The ink that has flown into the main ink container 31 is contained in a bottom portion thereof, while the air that has become the solvent gas is exhausted as the solvent gas to the outside of the main body 1, as indicated by the thick line of the arrow D3. When the ejection of the ink particles 68B from the nozzle 21 is started, the processing moves to Step S241.

### «Step S241»

In Step S241, the ink particles 68B ejected from the nozzle 21 is brought into a state where a voltage is applied thereto from the charging electrode 23, and an amount of charge thereof is checked by the charge sensor 48. When this is completed, the processing then moves to Step S242.

### «Step S242»

In Step S242, it is checked whether or not the amount of charge of the ink particles 68B measured by the charge sensor 48 is less than a threshold determined in advance and, when the amount of charge is less than the threshold, "YES" is given as a result of determination (that a state is established in which the ink particles 68B ejected from the nozzle 21 are collected from the gutter 25, and there is no abnormality in the application of the voltage from the charging electrode 23 to the ink particles 68B), and the processing moves to Step S251.

Meanwhile, when the amount of charge is not less than the threshold determined in advance, "NO" is given as a result of determination (that the ink particles 68B ejected from the nozzle 21 are not collected from the gutter 25 or there is an abnormality in the application of the voltage from the charging electrode 23 to the ink particles 68B), and the processing moves to the interruption processing in Step S281.

A result of the determination in Step S242 is used as "charging abnormality information" described in the claims. The "charging abnormality information" is transmitted by a "charging abnormality notification means" serving as the transmission means to the external control device 100.

### «Step S251»

In Step S251, a result of the detection from the temperature sensor A27 provided in the printing head 2 is checked. When this is completed, the processing then moves to Step S252.

### <<Step S252>>

In Step S252, the temperature of the temperature sensor A7 is determined. When a result of the detection from the temperature sensor A27 is less than 25 °C, "NO" is given as a result of determination (that, since the ambient temperature around the printing head 2 is low, generation of the ink particles 68B may possibly be unstable), and the processing moves to Step S253. Meanwhile, when the result of the detection from the temperature sensor A27 is equal to or more than 25 °C, "YES" is given as a result of determination, and the processing moves to Step S261.

A result of the determination in Step S252 is used as "temperature abnormality information". The "charging abnormality information" is transmitted by a "charging abnormality notification means" serving as the transmission means to the external control device 100.

### <<Step S253>>

In Step S253, by using the heater control circuit 317 and the heater 29 provided in the printing head 2, the ink to be supplied to the nozzle 21 is heated. The heater 29 continues the heating control of the ink until a result of the detection from the temperature sensor C30 rises to a predetermined temperature.

Thus, "heating information" indicating that heating by the heater is required and described in the claims is generated. The "heating information" is transmitted by a "heating notification means" serving as the transmission means to the external control device 100.

A time period required for the heating control by the heater 29 is longer as a detection result from the temperature sensor A27 is lower and is shorter as the detection result from the temperature sensor A27 is higher. When a detection result from the temperature sensor C30 reaches the predetermined temperature, the processing moves to Step S261.

In addition, the heater 29 continues the heating control of the ink in steps subsequent to Step S261 also as long as the detection result from the temperature sensor A27 is not more than 25 °C. In the present embodiment, the condition for the heating control by the heater 29 is assumed to be that the detection result from the temperature sensor A27 is less than 25 °C, but the condition for performing the heating control differs depending on a type of the ink or performance of the heater 29 and the nozzle 21. When this is completed, the processing then moves to Step S261.

### «Step S261»

In Step S261, using the viscosity meter 45 provided in the main body 1, the viscosity of the ink 68A is measured. Referring to Fig. 9, a description will be given of the operation.

In the viscosity measurement paths 824 and 822 in Fig. 9, the solenoid valve (for viscosity measurement) 57 is energized to open the flow path and, by operating the pump (for circulation) 36, as indicated by the thick line of an arrow D8, the ink 68A contained in the main ink container 31 of the main body 1 passes through the viscosity meter 45, the electromagnetic valve (for viscosity measurement) 57, and the pump (for circulation) 36 and returns to the main ink container 31 to be thus circulated.

By thus passing the ink 68A through the viscosity meter 45, the ink viscosity measured. Then, on the basis of a relationship between a temperature and a viscosity recorded for each ink type in the main body control unit 7, an ink density is calculated. When this is completed, the processing then moves to Step S262.

### <<Step S262>>

In Step S262, it is determined whether or not the ink viscosity (converted to the density) calculated in Step S261 and converted to the density is higher than a predetermined threshold. When the ink viscosity is lower than the threshold, "NO" is given as a result of determination (that, since the viscosity of the ink 68A in the main ink container 31 is low, the generation of the ink particles 68B may possibly be unstable), and the processing moves to Step S263. Meanwhile, when the ink viscosity is higher than the threshold, "YES" is given as a result of determination, and the processing moves to Step S271.

The result of the determination in Step S262, which is "YES", serves as "viscosity adjustment completion information" described in the claims. The "viscosity adjustment completion information" is transmitted by a "viscosity adjustment notification means" serving as the transmission means to the external control device 100.

### <<Step S263>>

In Step S263, the density of the ink 68A is controlled. Referring to Fig. 9, a description will be given of a detailed operation thereof.

In the inkjet recording device 600, as indicated by the thick line D3, the solvent component in the ink 68A is exhausted as the solvent gas to the outside of the device and accordingly, when an operation time period as described in Step S231 becomes longer, a ratio of the solvent component in the ink 68A decreases to result in a state where the density of the ink 68A is high. In the main ink container 31, the liquid amount of the ink 68a accordingly decreases by an amount of the solvent component exhausted to the outside of the device, and therefore the liquid amount corresponding thereto is replenished from the ink 68C in the auxiliary ink container 32.

Specifically, in the ink replenishment path 806 in Fig. 9, the solenoid valve (for replenishment) 54 is energized to open the flow path, and the switch valve 26 is energized to result in a state where the ink replenishment path is connected to the nozzle 21 and, by operating the pump (for supply) 34, as indicated by the thick line of the arrow D8, the ink 68C contained in the auxiliary ink container 32 of the main body 1 is joined with the arrow D1 to be supplied to the nozzle 21 of the printing head 2 to be replenished into the main ink container 31 via the ink collection paths 811 to 812 indicated by the arrow D2.

Such operations are repeatedly performed by repeatedly performing Step S261 to Step S263 until the viscosity of the ink 68A becomes higher than the predetermined threshold, thereby adjusting the ink viscosity. When the viscosity becomes higher than the threshold, the processing moves to Step S271.

### «Step S271»

In Step S271, normal completion of the operation start (ink ejection start) processing for the inkjet recording device 600 is displayed on the message display area 131 of the external control device 100. At this time, the notification means of the main body control unit 7 serving as the transmission means transmits the various operation information described above to the external control device. This allows the external control device 100 to check the various operation information and allows remote monitoring. Then, the display of the current device state 113 is switched from "SUSPENDED" to "STANDBY". When this is completed, the processing then moves to Step S272.

### <<Step S272>>

Then, in Step S272, the various information described above is updated to a latest state, and the processing is ended. The inkjet recording device 600 is in a state where the power is supplied to the ink circulation system components such as the pump (for supply) 34 and the solenoid valve (for supply) 49, and the ink particles 68B are ejected from the nozzle 21.

### «Step S281»

In Step S281, on the basis of the result of the determination in Step S212, S222, or Step S242, the operation start (ink ejection start) processing is interrupted. In the inkjet recording device 600, the supply of the power to the ink circulation system components such as the pump (for supply) 34 and the solenoid valve (for supply) 49 is stopped. When this is completed, the processing then moves to Step S282.

### «Step S282»

In Step S282, the interruption of the operation start (ink ejection start) processing for the inkjet recording device 600 is displayed on the message display area 131 of the external control device 100. At this time, the notification means of the main body control unit 7 serving as the transmission means transmits the various operation information described above to the external control device. This allows the external control device 100 to check the various operation information and allows remote monitoring. In addition, on the message display area 131, a coping method is displayed together with a reason for the interruption of the processing. When this is completed, the processing then moves to Step S283.

### «Step S283»

In Step S283, the various information (operation data) is updated to a latest state, and the processing is ended. The inkjet recording device 600 stands by in a state where the ink circulation system components such as the pump (for supply) 34 and the solenoid valve (for supply) 49 are not supplied with the power and are in the non-operating state.

### <Description of Operation Stop Processing Flow>

Next, referring to Figs. 10 to 11, a description will be given of a flow of control when, in the inkjet recording system 501 according to the present embodiment, by operating (remotely operating) the external control device 100, the operation of the inkjet recording device 600 is stopped.

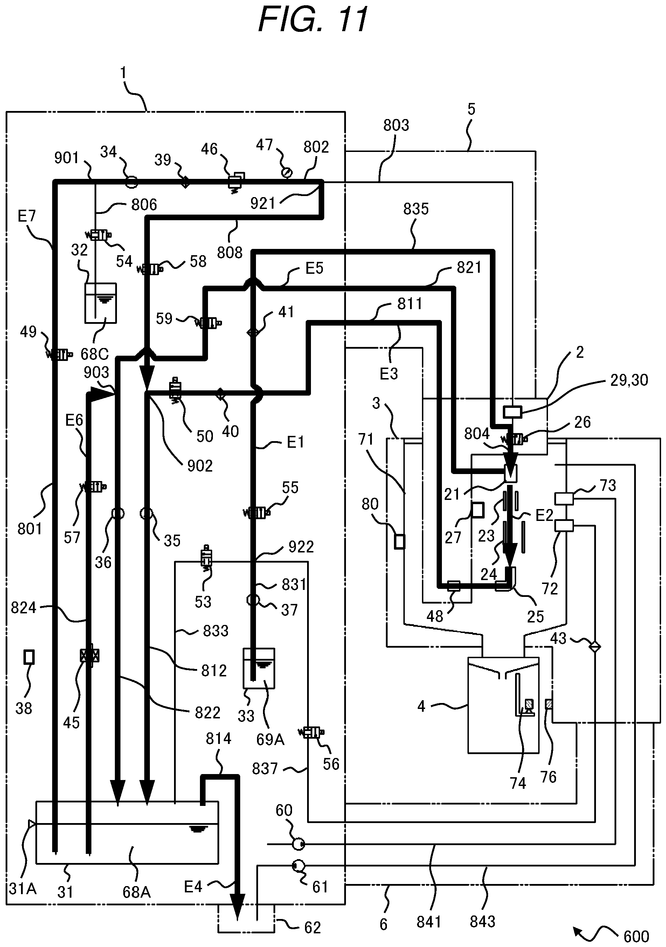

Fig. 10 is a flow chart diagram of the operation stop (ink ejection stop) processing for the inkjet recording device 600 in the present embodiment. Fig. 11 is a diagram illustrating flows (E1 to E7) of the ink, the solvent, and the air by thick lines when the inkjet recording device 600 in the present embodiment is in a state where the printing head 2 is mounted in the head mounting unit 3 and the nozzle cleaning and the circulation path cleaning is performed.

### «Step S301»

First, in Step S301, the ink stop button 142 for performing the operation stop processing displayed on the external control device 100 is operated (pushed). A condition for the start button for performing the operation stop (ink ejection stop) processing to be enabled is that the inkjet recording device 600 is in a state where the ink circulation system components such as the pump (for supply) 34 and the solenoid valve (for supply) 49 are supplied with the power, and the ink particles 68B are ejected from the nozzle 21. When this is completed, the processing then moves to Step S311.

### «Step S311», «Step S312», «Step S321», and «Step S322»

In Fig. 10, in Steps S311, S312, S321, and S322, the same operations as those in Steps S211, S212, S221, and S222 described with reference to Fig. 8 are performed. Accordingly, a description of Steps S311, S312, S321, and S322 is omitted. When these are completed, the processing then moves to Step S331.

### «Step S331»

Step S331 is an ink ejection stop step, and processing of stopping the ejection of the ink particles 68B from the nozzle 21 of the printing head 2 is performed. In the ink supply paths (paths 801 to 804) in the inkjet recording device 600, a supply of the power to the solenoid valve (for supply) 49 and the switch valve 26 is stopped to bring these valves into a non-conducting state, thereby close the flow path, and prevent the ink 68A from being supplied from the main ink container 31 to the nozzle 21. When this is completed, the processing then moves to Step S332.

### «Step S332»

In Step S332, when the processing in Step S331 is normally completed, "YES" is given as a result of determination, and the processing moves to Step S341. Meanwhile, when any abnormality is detected and the processing in Step S331 cannot be normally completed, "NO" is given as a result of determination, and the processing moves to interruption processing in Step S361.

### «Step S341»

Step S341 is a step of cleaning the circulation paths, and the solvent 69A is supplied to the nozzle 21 of the printing head 2 to perform the cleaning from inside the nozzle 21. A description will be given of the operation with reference to Fig. 11.

In the nozzle cleaning paths (paths 831 and 835) in Fig. 11, the solenoid valve (for nozzle cleaning) 55 is energized to open the flow path and, by operating the pump (for solvent) 37, as indicated by the thick line of the arrow E1, the solvent 69A contained in the solvent container 33 of the main body 1 is supplied to the printing head 2 and ejected from the nozzle 21.

Then, in the paths 811 to 812 for ink collection, the solenoid valve (for collection) 50 is energized to open the flow path and, by operating the pump (for collection) 35, as indicated by the thick line of the arrow E1, the solvent 69A ejected from the nozzle 21 is captured by the gutter 25 to be collected into the main ink container 31.

In the ink circulation paths 821 to 822, the solenoid valve (for circulation) 59 is energized in a state where the solvent 69A is supplied from the solvent container 33 to the nozzle 21 as indicated by the thick line of the arrow E1 to open the flow path and, by operating the pump (for circulation) 36, at least a portion of the solvent 69A supplied to the nozzle 21 is suctioned into the pump (for circulation) 36 to be collected in a flow indicated by the thick line of the arrow E3 into the main ink container 31. Thus, the inkjet recording device 600 can clean the nozzle 21, the ink paths (for collection) 811 to 812, and the paths (for ink circulation) 821 to 822 by using the solvent 69A.

After the cleaning of the paths (the nozzle 21, the ink collection paths 811 to 812, and the ink circulation paths 821 to 822) is completed, in the main body 1, the solenoid valve (for supply) 49 and the solenoid valve (for main body circulation) 58 are energized to open the flow path and, by operating the pump (for supply) 34 and the pump (for collection) 35, as indicated by the thick line of the arrow E7, the ink 68A contained in the main ink container 31 of the main body 1 is circulated.

Furthermore, in the main body 1, the solenoid valve (for viscosity measurement) 57 is energized to open the flow path and, by operating the pump (for circulation) 36, as indicated by the thick line of the arrow E6, the ink 68A contained in the main ink container 31 of the main body 1 is supplied to the viscosity meter 45 and, at timing of ink circulation in the main body 1, the viscosity of the ink 68A is measured by using the viscosity meter 45 to allow a state of the ink 68A to be used next time to be recognized. When this is completed, the processing then moves to Step S342.

### «Step S342»

In Step S342, when the processing in Step S341 is normally completed, "YES" is given as a result of determination, and the processing moves to Step S351. Meanwhile, when any abnormality is detected and the processing in Step S341 cannot be normally completed, "NO" is given as a result of determination, and the processing moves to interruption processing in Step S361.

### «Step S351»

In Step S351, the normal completion of the operation stop (ink ejection stop) processing for the inkjet recording device 600 is displayed on the message display area 131 of the external control device 100. At this time, the notification means of the main body control unit 7 serving as the transmission means transmits the various operation information described above to the external control device. This allows the external control device 100 to check the various operation information and allows remote monitoring. Then, the display of the current device state 113 is switched from "STANDBY" to "SUSPENDED". When this is completed, the processing then moves to Step S352.

### <<Step S352>>

In Step S352, the various information is updated to the latest state, and the processing is ended. The inkjet recording device 600 stands by in a state where, in the inkjet recording device 600 including the pump (for supply) 34, the solenoid valve (for supply) 49, and the like, the supply of the power to the ink circulation system components such as the pump (for supply) 34 and the solenoid valve (for supply) 49 is stopped.

### «Step S361»

In Step S361, on the basis of the result of the determination in Step S312, Step S322, Step S332, or Step S342, the operation stop (ink ejection stop) processing is interrupted. In the inkjet recording device 600, the supply of the power to the ink circulation system components such as the pump (for supply) 34 and the solenoid valve (for supply) 49 is stopped. When this is completed, the processing then moves to Step S362.

### <<Step S362>>

In Step S362, the interruption of the operation start (ink ejection start) processing for the inkjet recording device 600 is displayed on the message display area 131 of the external control device 100. In addition, on the message display area 131, a coping method is displayed together with a reason for the interruption of the processing. At this time, the notification means of the main body control unit 7 serving as the transmission means transmits the various operation information described above to the external control device. This allows the external control device 100 to check the various operation information and allows remote monitoring. When this is completed, the processing then moves to Step S363.

### <<Step S363>>

In Step S363, the various information (operation data) is updated to the latest state, and the processing is ended. The inkjet recording device 600 stands by in a state where the ink circulation system components such as the pump (for supply) 34 and the solenoid valve (for supply) 49 are not supplied with the power and are in the non-operating state.

### <Description of Head Cleaning Processing Flow>

Next, referring to Figs. 12 to 14, a description will be given of a flow of control when, in the inkjet recording system 501 according to the present embodiment, the printing head 2 of the inkjet recording device 600 is cleaned by operating (remotely operating) the external control device 100.

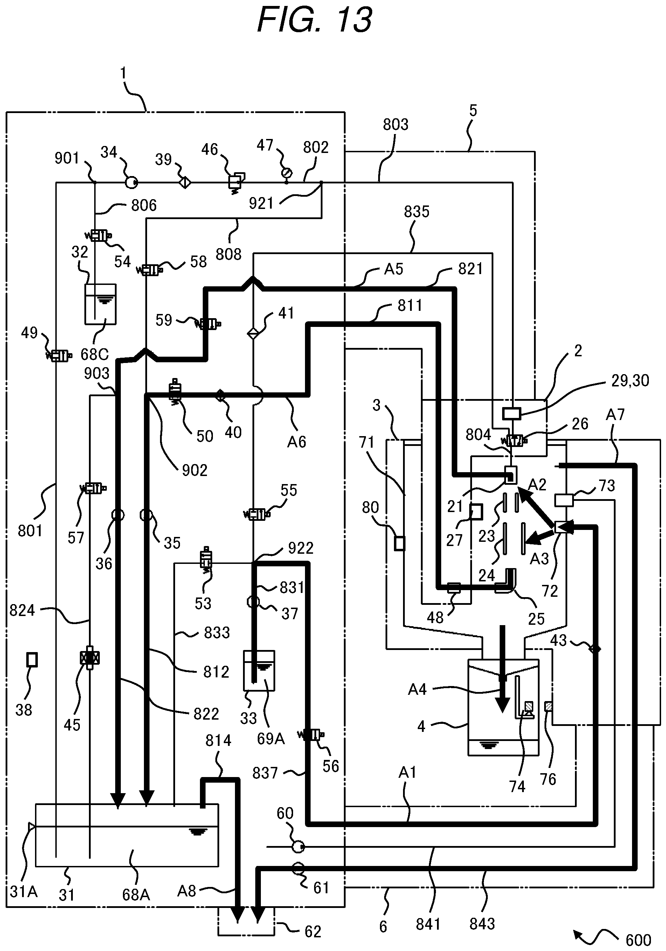

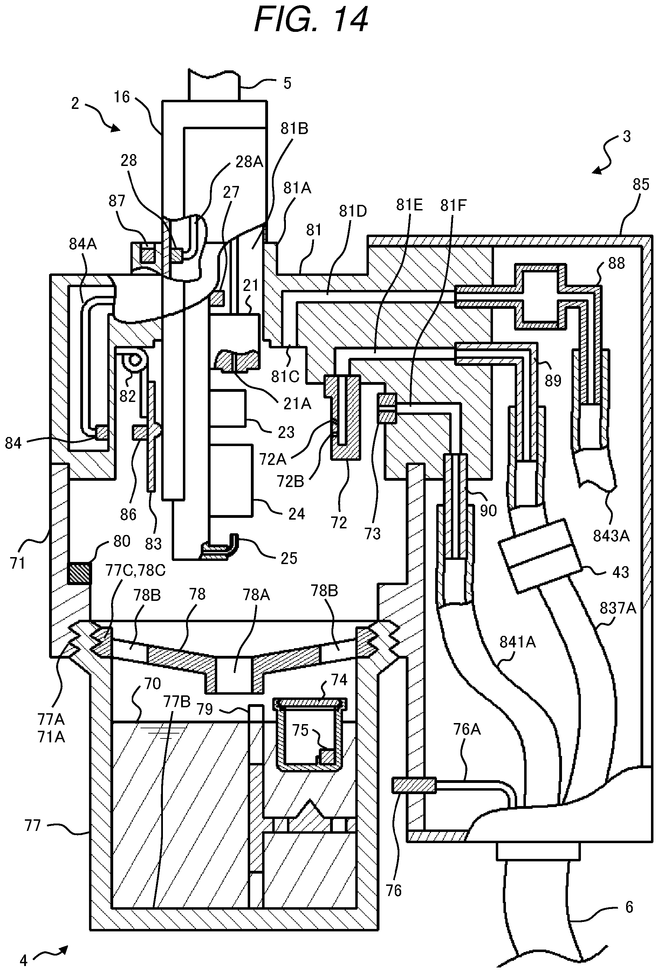

Fig. 12 is a flow chart diagram of the head cleaning processing. Fig. 13 is a fluid path diagram illustrating a flow of a liquid (the cleaning liquid) and flows (A1 to A8) of gaseous bodies (such as the air and the solvent gas) in the entire device with thick lines when the head cleaning processing is performed in a state where the printing head 2 is mounted in the head mounting unit 3. Fig. 14 is a diagram illustrating a state where, in the head mounting unit, a large amount of the cleaning liquid is contained in the collection container. First, referring to Fig. 12, a description will be given of an operation flow of the head cleaning processing in the inkjet recording device 600 in the present embodiment.

### «Step S401»

In Step S401, the head cleaning start button 143 for performing the head cleaning processing displayed on the external control device 100 is operated (pushed). A condition for the start button for performing the head cleaning processing to be enabled is that the inkjet recording device 600 is in a state where the ink ejection from the nozzle 21 of the printing head 2 is stopped, the ink circulation system components such as the pump (for supply) 34 and the solenoid valve (for supply) 49 are not supplied with the power and is not operating. When this is completed, the processing then moves to Step S411.

### «Step S411», «Step S412», «Step S421», and «Step S422»

In Fig. 12, in Steps S411, S412, S421, and S422, the same operations as those in Steps S211, S212, S221, and S222 described with reference to Fig. 8 are performed. Accordingly, a description of Steps S411, S412, S421, and S422 is omitted. When this is completed, the processing then moves to Step S431.

### «Step S431»

In Step S431, whether or not an amount of the solvent 69A in the solvent container 33 is sufficient to perform the head cleaning is confirmed by using a liquid amount sensor not shown. When this is completed, the processing then moves to S432.

### «Step S432»

In Step S432, when the liquid amount sensor of the solvent container 33 has detected the ON state and it is successfully confirmed that the liquid amount of the solvent 69A is sufficient to perform the head cleaning, "YES" is given as a result of determination, and the processing moves to Step S441.

Meanwhile, when the liquid amount sensor of the solvent container 33 has detected the OFF state and the liquid amount of the solvent 69A is not sufficient to perform the head cleaning, "NO" is given as a result of determination, and the processing moves to interruption processing in Step S481.

A result of the determination in Step S432 is used as "liquid amount abnormality information" described in the claims. The "liquid amount abnormality information" is transmitted by a "liquid amount abnormality notification means" to the external control device 100.

### «Step S441»

In Step S441, the solvent 69A is supplied to the cleaning nozzle 72 of the head mounting unit 3 to clean the printing head 2. A description will be given of an operation thereof with reference to Fig. 13.

In Fig. 13, the inkjet recording device 600 is in a state where, for the printing head cleaning, the printing head 2 is mounted in the head mounting unit 3.

In the head cleaning paths (the path 831 and the path 837), the electromagnetic valve (for head cleaning) 56 is energized to open the flow path and, by operating the pump (for solvent) 37, as indicated by the thick line of the arrow A1, the solvent serving as the cleaning liquid is supplied to the head mounting unit 3. In other words, it is possible to supply the solvent 69A contained in the solvent container 33 of the main body 1 to the cleaning nozzle 72 assembled to the inside of the cleaning tank 71 of the head mounting unit 3.

The cleaning nozzle 72 blows out (ejects) the solvent 69A toward the printing head to clean the printing head 2. Specifically, the solvent 69A supplied to the cleaning nozzle 72 is blown out in a direction indicated by the arrow A2 (direction in which the solvent 69A is blown out from the liquid ejection port A portion 72A to aim at the nozzle 21) and in a direction indicated by the arrow A3 (direction in which the solvent 69A is blown out from the liquid ejection port B portion 72B to aim at the deflection electrode 24) to be sprayed onto the components such as the nozzle 21 assembled to the printing head 2 and the deflection electrode 24 and successfully clean contamination due to the ink 68A having adhered during the operation of the inkjet recording device 600 and during the maintenance thereof.

The solvent 69A that has cleaned the components such as the nozzle 21 assembled to the printing head 2 and the deflection electrode 24 drips downward by gravity to flow. In the state where the printing head 2 is mounted in the head mounting unit 3, the charging electrode 23 and the gutter 25 disposed below the deflection electrode 24 can be cleaned with the solvent 69A.

In the head cleaning processing, the solvent 69A that has cleaned the components such as the nozzle 21, the charging electrode 23, the deflection electrode 24, and the gutter 25 which are disposed in the printing head 2 drips in the direction indicated by the arrow A4 to flow into the collection container 4 disposed below the head mounting unit 3 and be able to be stored as the liquid 70A in the liquid reservoir 77B.

Meanwhile, in the ink circulation paths (821 to 822), the solenoid valve (for circulation) 59 is energized to open the flow path and, by operating the pump (for circulation) 36, as indicated by the thick line of the arrow A5, a portion of the solvent 69A which has hit the nozzle 21 is suctioned from the nozzle 21 to be collected into the main ink container 31 of the main body 1. Thus, in the head cleaning processing, the inside of the nozzle 21 and the ink circulation paths 821 to 822 can also be cleaned with the solvent 69A.

Furthermore, in the ink collection paths (811 to 812), the solenoid valve (for collection) 50 is energized to open the flow path and, by operating the pump (for collection) 35, as indicated by the thick line of the arrow A6, a portion of the solvent 69A which has hit the gutter 25 is suctioned from the gutter 25 to be collected into the main ink container 31 of the main body 1. Thus, in the head cleaning processing, the inside of the gutter 25 and the ink collection paths 811 to 812 can also be cleaned with the solvent 69A.

In the nozzle 21 and the gutter 25, ambient air is suctioned together with the solvent 69A. Into the air suctioned at this time, the vaporized solvent 69A is dissolved in the ink circulation paths 821 to 822 and the ink collection paths 811 to 812 to result in solvent vapor. After flowing into the main ink container 31, the solvent vapor is exhausted into the exhaust duct connection portion 62 communicating with the outside of the main body 1 via the path 814.

In the air suction path (path 841), by operating the pump (for suction) 61, as indicated by the thick line of the arrow A7, the solvent vapor generated in the cleaning tank 71 of the head mounting unit 3 is suctioned from the hole portion 81C to be exhausted into the exhaust duct connection portion 62 communicating with the outside of the main body 1.

In the inkjet recording device 600, such a configuration as to collectively exhaust the solvent vapor exhausted from the main ink container 31 and the solvent vapor exhausted from the head mounting unit 3 from the exhaust duct connection portion 62 is used. The exhaust duct connection portion 62 is at a place away from the operation display unit 8 of the main body 1, and assembled to, e.g., a rear surface or bottom surface of the main body 1. After cleaning the printing head 2, the processing then moves to Step S442.

### «Step S442»

In Step S442, when the processing in Step S441 is normally completed, "YES" is given as a result of determination, and the processing moves to Step S451. Meanwhile, when any abnormality is detected and the processing in Step S441 cannot be normally completed, "NO" is given as a result of determination, and the processing moves to the interruption processing in Step S481. Abnormalities detected in Step S442 include a case where the head cleaning processing was repeatedly performed and the liquid amount in the collection container 4 increased, and a description will be given of the state with reference to Fig. 14.

In the inkjet recording device 600, in a case where the collection container 4 is internally substantially full of the cleaning liquid 70, a state as illustrated in Fig. 14 is established. In other words, due to a liquid level rise in the collection container 4, the float 74 floats up, and the magnetic sensor A76 can no longer output a liquid level detection signal.

In this case, the main body control unit 7 can sense (determine) that an amount of the cleaning liquid 70 that can further be contained in the collection container 4 is small, and the collection container 4 is substantially full. When sensing such a state, the main body control unit 7 displays a warning on the operation display unit 8 or on the display unit 20 of the head mounting unit 3 or notifies the external control device 100 of the warning. The operation display unit 8, the display unit 20 of the head mounting unit 3, and the external control device 100 may also display, together with the warning, a message indicating that, e.g., the collection container 4 should be detached and the liquid 70 therein should be drained as a coping method.

Such a warning allows the worker to detach the collection container 4 and drain the liquid 70 in the collection container 4, as illustrated in Fig. 4. Then, the empty collection container 4 is attached again to the lower portion of the cleaning tank 71. Since the magnetic sensor A76 of the liquid level detection device is disposed outside the collection container 3, a detaching/attaching operation for the collection container 4 is easy.

When the collection container 4 is attached, the float 74 is at a position detectable by the magnetic sensor A76, and therefore the magnetic sensor A76 starts outputting a liquid level sensing signal. The main body control unit 7 can receive the liquid level detection signal from the magnetic sensor A76 and determine that the collection container 4 is attached. On the basis of this determination, the main body control unit 7 clears the warning displayed on the operation display unit 8. Alternatively, it is possible to perform control such that a message indicating that the head mounting unit 3 is in an operable (cleanable) state is displayed or a state where a head cleaning operation is prohibited is cancelled and the head cleaning is permitted.

### «Step S451»

In Step S451, a voltage is applied to the deflection electrode 24, and it is confirmed whether or not the voltage is to be detected with the charge sensor 48. When this is completed, the processing then moves to Step S452.

### <<Step S452>>

In Step S452, it is confirmed whether or not the voltage measured with the charge sensor 48 is in excess of the predetermined threshold and, when the threshold is not exceeded, "YES" is given as a result of determination (that the printing head 2 has less residual contamination), and the processing moves to Step S461. Meanwhile, when the predetermined threshold is exceeded, "NO" is given as a result of determination (that the printing head 2 has more residual contamination), and the processing moves to Step S471.

### «Step S461»

In Step S461, normal completion of the head cleaning processing for the inkjet recording device 600 is displayed on the message display area 131 of the external control device 100. At this time, the notification means of the main body control unit 7 serving as the transmission means transmits the various operation information described above to the external control device. This allows the external control device 100 to check the various operation information and allows remote monitoring. When this is completed, the processing then moves to Step S462.

### «Step S462»

In Step S462, the various information is updated to the latest state, and the processing is ended. The inkjet recording device 600 stands by in a state where the supply of the power to the ink circulation system components such as the pump (for supply) 34 and the solenoid valve (for supply) 49 is stopped.

### «Step S471»

In step S471, a message indicating that the printing head 2 may possibly have residual contamination and such a coping method as to perform the head cleaning processing again are displayed on the message display area 131 of the external control device 100. When this is completed, the processing then moves to Step S472.

### «Step S472»

In Step S472, the various information is updated to the latest state, and the processing is ended. At this time, the notification means of the main body control unit 7 serving as the transmission means transmits the various operation information described above to the external control device. This allows the external control device 100 to check the various operation information and allows remote monitoring. The inkjet recording device 600 stands by in a state where the supply of the power to the ink circulation system components such as the pump (for supply) 34 and the solenoid valve (for supply) 49 is stopped.

### «Step S481»

In Step S481, the head cleaning processing is interrupted on the basis of the result of the determination in Step S412, Step S422, Step S432, or Step S442. In the inkjet recording device 600, the supply of the power to the ink circulation system components such as the pump (for supply) 34 and the solenoid valve (for supply) 49 is stopped. When this is completed, the processing then moves to Step S482.

### «Step S482»

In Step S482, the interruption of the head cleaning processing for the inkjet recording device 600 is displayed on the message display area 131 of the external control device 100. In addition, on the message display area 131, a coping method is displayed together with a reason for the interruption of the processing. When this is completed, the processing then moves to Step S483.

### << Step S483>>

In Step S483, the various information (operation data) is updated to the latest state, and the processing is ended. At this time, the notification means of the main body control unit 7 serving as the transmission means transmits the various operation information described above to the external control device. This allows the external control device 100 to check the various operation information and allows remote monitoring. The inkjet recording device 600 stands by in a state where the ink circulation system components such as the pump (for supply) 34 and the solenoid valve (for supply) 49 are not supplied with the power and are in the non-operating state.

### <Description of Automatic Ink Circulation Processing Flow>

Next, referring to Figs. 15 to 16, a description will be given of a flow of control when, in the inkjet recording system 501 according to the present embodiment, automatic ink circulation is performed by operating (remotely operating) the external control device 100 and thereby controlling the inkjet recording device 600.

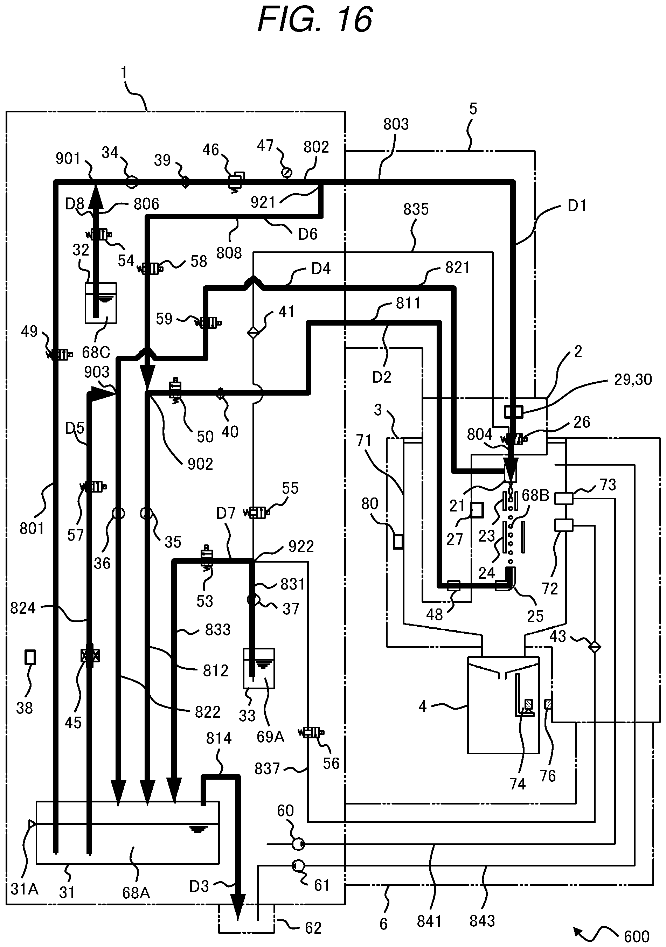

Fig. 15 is a flow chart diagram of the control when the automatic ink circulation is performed. Fig. 16 is a fluid path diagram in which a flow of a liquid and flows of gases (D1 to D8) when a state where the printing head 2 is mounted in the head mounting unit 3 is established and ink circulation is performed in the main body and the printing head are indicated by thick lines.

It is to be noted herein that the processing flow in Fig. 15 is an "ink circulation cycle means" described in the claims that performs an operation of repeating an ink circulation cycle in which the ink is circulated in each of paths by ejecting the ink from the nozzle at set intervals, then stops the ejection of the ink from the nozzle, and stands by.

### «Step S501»

In Step S501, the ON button for the automatic ink circulation setting 120 displayed on the external control device 100 is operated (pushed). A condition for the ON button for the automatic ink circulation setting 120 to be enabled is that the inkjet recording device 600 is in a state where the ink ejection from the nozzle 21 of the printing head 2 is stopped and the ink circulation system components such as the pump (for supply) 34 and the solenoid valve (for supply) 49 are not supplied with the power and are not operating. When this is completed, the processing then moves to Step S511.

### <<Step S511>>, <<Step S512>>, <<Step S521>>, and <<Step S522>>

In Fig. 15, in Steps S511, S512, S521, and S522, the same operations as those in Steps S211, S212, S221, and S222 described with reference to Fig. 8 are performed. Accordingly, a description of Steps S511, S512, S521, and S522 is omitted.
When these are completed, the processing then moves to Step S531.

### «Step S531»

In Step S531, first, the same operation as the ink ejection start in Step S231 described with reference to Fig. 9 is performed. Then, the ink particles 68B ejected from the nozzle 21 are brought into a state where the voltage is applied thereto from the charging electrode 23, and the amount of charge thereof is checked by the charge sensor 48. When this is completed, the processing then moves to Step S532.

### <<Step S532>>

In Step S532, when the processing in Step S531 is normally completed, "YES" is given as a result of determination (that there is no abnormality), and the processing moves to Step S541. Meanwhile, when any abnormality is detected and the processing in Step S531 cannot be normally completed, "NO" is given as a result of determination, and the processing moves to ink ejection interruption processing in Step S580.

### «Step S541»

In Step S541, an operation of the ink circulation processing in the paths is performed. A description will be given of the ink circulation processing with reference to Fig. 16.

It is to be noted herein that, in Step S541, "circulation cycle execution information" described in the claims and indicating a situation in which the ink circulation cycle is executed is generated, and the "circulation cycle execution information" is transmitted by a "circulation cycle execution situation notification means", which is the transmission means, to the external control device 100.

In the inkjet recording device 600 in Fig. 16, the common operation as that in Fig. 9 is performed in the ink supply paths 801 to 804 indicated by the arrow D1, the ink collection paths 811 to 812 indicated by the arrow D2, and the solvent gas exhaust path 814 indicated by the arrow D3, and therefore a description thereof is omitted. In Fig. 16, a description will be given of portions different from those in Fig. 9.

In the inkjet recording device 600, as described with reference to Fig. 9, the solvent component in the ink 68A is exhausted as the solvent gas to the outside of the device and, accordingly, when the operation time period is elongated, the ratio of the solvent component in the ink 68A is reduced, and the density of the ink 68A may be higher. Conversely, when the operation time period is short, due to the solvent 69A that has flown into the main ink container 31 as a result of the circulation system cleaning processing or the like, the density of the ink may be lower.

Therefore, in the paths (for viscosity measurement) 824 and 822, the solenoid valve (for viscosity measurement) 57 is energized to open the flow path and, by operating the pump (for circulation) 36, as indicated by the thick line of the arrow D5, the ink 68A in the main ink container 31 is transmitted to the viscosity meter 45, and the viscosity (converted to the density) of the ink 68A is periodically measured.

A detection value of the measured viscosity is input to the main body control unit 7. As a result, the main body control unit 7 performs control such that, when the density of the ink 68A is low, the ink 68C in the auxiliary ink container 32 is replenished into the main ink container 31 and, when the density of the ink 68A is high, as indicated by the thick line of the arrow D7, the solvent 69A in the solvent container 33 is replenished into the main ink container 31. Thus, in the inkjet recording device 600, the control is performed such that the viscosity of the ink 68A falls within a management value range.

In the ink circulation paths 821 to 822, the ink 68A is circulated such that, in a state where the ink 68A is supplied from the main ink container 31 to the nozzle 21 as indicated by the thick line of the arrow D1, the solenoid valve (for circulation) 59 is energized to open the flow path and, by operating the pump (for circulation) 36, at least a portion of the ink 68A supplied to the nozzle 21 is suctioned by the pump (for circulation) 36 to return to the main ink container 31 in a flow indicated by the thick line of the arrow D2.

In addition, before the switch valve 26 is energized, the solenoid valve (for main body circulation) 58 is energized to open the flow path and, by operating the pump (for circulation) 36, as indicated by the thick line of the arrow D6, it is also possible to circulate the ink 68A in the path (for main body circulation) 808.

Thus, by circulating the ink in substantially all the paths, the inkjet recording device 600 can prevent the ink in the paths from drying out and sticking. Then, the ink particles 68B ejected from the nozzle 21 are brought into the state where the voltage is applied thereto from the charging voltage 23 and, by checking the amount of charge thereof with the charge sensor 48, the inkjet recording device 600 checks the presence or absence of an abnormality even during the ink circulation processing.

The ink circulation processing is continued until a given time period elapses or until the liquid level sensor 31A of the main ink container 31 determines that, as a result of the exhaust of the exhaust gas, the liquid amount of the ink 68A has decreased by a given amount. When this is completed, the processing then moves to Step S542.

### <<Step S542>>

In Step S542, when it is determined that the ink circulation processing in Step S541 is normally completed, "YES" is given as a result of determination (that there is no abnormality), and the processing moves to Step S551. Meanwhile, when any abnormality related to thermal circulation is detected and the ink circulation processing in Step S541 cannot be normally completed, "NO" is given as a result of determination, and the processing moves to the ink ejection interruption processing in Step S580.

The result of the determination in Step S542 is used as "circulation cycle abnormality information" described in the claims. The "circulation cycle abnormality information" is transmitted by a "circulation cycle abnormality notification means", which is the transmission means, to the external control device 100.

### <<Step S551>>

In Step S551, the same operation as the ink ejection stop in Step S331 described with reference to Fig. 10 is performed. When this is completed, the processing then moves to Step S552.

### <<Step S552>>

In Step S552, the same operation as the circulation path cleaning in Step S341 described with reference to Fig. 10 is performed. When this is completed, the processing then moves to Step S553.

### <<Step S553>>

In Step S553, when the processing in Step S552 is normally completed, "YES" is given as a result of determination, and the processing moves to standby in Step S561. Meanwhile, when any abnormality is detected, and the processing in Step S552 cannot be normally completed, "NO" is given as a result of determination, and the processing moves to interruption processing in Step S591.

### <<Step S561>>

In Step S561, the inkjet recording device 600 stands by for a period input to "_" in "AUTOMATIC CIRCULATION CYCLE: ○ DAYS" in the automatic ink circulation setting 120 under a condition that the current device state 113 is "SUSPENDED". When this is completed, the processing then moves to Step S562.

### <<Step S562>>

In Step S562, during the standby period in Step S561, by using the external control device 100, it is confirmed whether or not an OFF button for the automatic ink circulation setting 120 is operated (pushed). When the OFF button has been operated (pushed), "YES" is given as a result of determination, and the processing moves to Step S571. Meanwhile, when the OFF button has not been operated (pushed), "NO" is given as a result of determination, and the processing moves to Step S563.

### <<Step S563>>

Since the OFF button has not been operated (pushed), in Step S563, when it is successfully confirmed that the standby period for the inkjet recording device 600 in Step S561 has passed the period input to "AUTOMATIC CIRCULATION CYCLE: ○ DAYS" in the automatic ink circuit setting 120, the ink ejection start step in Step S531 is performed again.

It is to be noted herein that a date and time when the ink is ejected from the nozzle of the printing head is stored and may also be transmitted and, when the ink has not been ejected from the nozzle over a set period or longer, the stored date and time may also be transmitted as "non-ejection time period information" described in the claims and indicating that the ink is not ejected from the nozzle by a "non-ejection time period notification means", which is the transmission means, to the external control device 100.

### <<Step S571>>

Since the OFF button has been operated (pushed), in Step S571, the cancellation of the automatic ink circulation setting 120 in the inkjet recording device 600 is displayed on the message display area 131 of the external control device 100. At this time, the notification means of the main body control unit 7 serving as the transmission means transmits the various operation information described above to the external control device. This allows the external control device 100 to check the various operation information and allows remote monitoring. When this is completed, the processing then moves to Step S572.

### << Step S572>>

In Step S572, the various information is updated to the latest state, and the processing is ended. The inkjet recording device 600 stands by in a state where the supply of the power to the ink circulation system components such as the pump (for supply) 34 and the solenoid valve (for supply) 49 is stopped.

### <<Step S580>>

Next, Step S580 is an ink ejection interruption step based on the result of the determination in Step S532 or Step S542, and processing of stopping the ejection of the ink particles 68B from the nozzle 21 of the printing head 2 is performed. In the ink supply paths (paths 801 to 804) in the inkjet recording device 600, a supply of the power to the solenoid valve (for supply) 49 and the switch valve 26 is stopped to bring these valves into a non-conducting state, thereby close the flow path, and prevent the ink 68A from being supplied from the main ink container 31 to the nozzle 21. When this is completed, the processing then moves to Step S581.

### <<Step S581>>

In Step S581, the same operation as the head cleaning in Step S441 described with reference to Fig. 12 is performed. When this is completed, the processing then moves to Step S582.

### <<Step S582>>

In Step S582, the same operation as the ink ejection start in Step S531 described above is performed. When this is completed, the processing then moves to Step S583.

### <<Step S583>>

In Step S583, by the same method as used in Step S532, it is confirmed whether or not the abnormality detected in Step S532 or Step S542 is fixed. When it can be determined that the abnormality is fixed (there is no abnormality), "YES" is given as a result of determination, and the processing moves to Step S541. Meanwhile, when any abnormality is detected, "NO" is given as a result of determination, and the processing moves to the interruption processing in Step S591.

### <<Step S591>>

In Step S591, on the basis of the result of the determination in Step S512, Step S522, Step S583, or Step S553, the automatic ink circulation setting is cancelled. In the inkjet recording device 600, the supply of the power to the ink circulation system components such as the pump (for supply) 34 and the solenoid valve (for supply) 49 is stopped. When this is completed, the processing then moves to Step S592.

### <<Step S592>>

In Step S592, the cancellation of the automatic ink circulation setting 120 in the inkjet recording device 600 is displayed on the message display area 131 of the external control device 100. In addition, on the message display area 131, a coping method is displayed together with a reason for the interruption of the processing. At this time, the notification means of the main body control unit 7 serving as the transmission means transmits the various operation information described above to the external control device. This allows the external control device 100 to check the various operation information and allows remote monitoring. When this is completed, the processing then moves to Step S593.

### <<Step S593>>

Then, in Step S593, the various information (operation data) is updated to the latest state, and the processing is ended. The inkjet recording device 600 stands by in a state where the ink circulation system components such as the pump (for supply) 34 and the solenoid valve (for supply) 49 are not supplied with the power and are in the non-operating state.

### <Description of Effects>

According to the present embodiment, by allowing the state of the inkjet recording device 600 to be checked by using the external control device 100, if there is an abnormality, it is possible to contact the worker and give a request to take action, and it is possible to prevent the inkjet recording device from being left in an abnormal state.

In addition, according to the present embodiment, by mounting the printing head 2 of the inkjet recording device 600 in the head mounting unit 3, it is possible to use the external control device 100 to remotely perform daily work such as the operation start processing (ink ejection start) and the operation stop processing (ink ejection stop).

Moreover, according to the present embodiment, by mounting the printing head 2 of the inkjet recording device 600 in the head mounting unit 3, it is possible to use the external control device 100 to remotely perform daily maintenance work such as the head cleaning processing and the setting of the automatic ink circulation processing.

Furthermore, according to the present embodiment, by allowing the operation information to be remotely checked when the automatic ink circulation processing is performed, if there is an abnormality, it is possible to contact the worker and give a request to take action, and it is possible to prevent the inkjet recording device from being left in the abnormal state.

### Second Embodiment

Next, a description will be given of an inkjet recording system 502 in a second embodiment of the present invention. In the second embodiment also, the same configurations as those in Figs. 1 to 16 described in the first embodiment can be adopted.

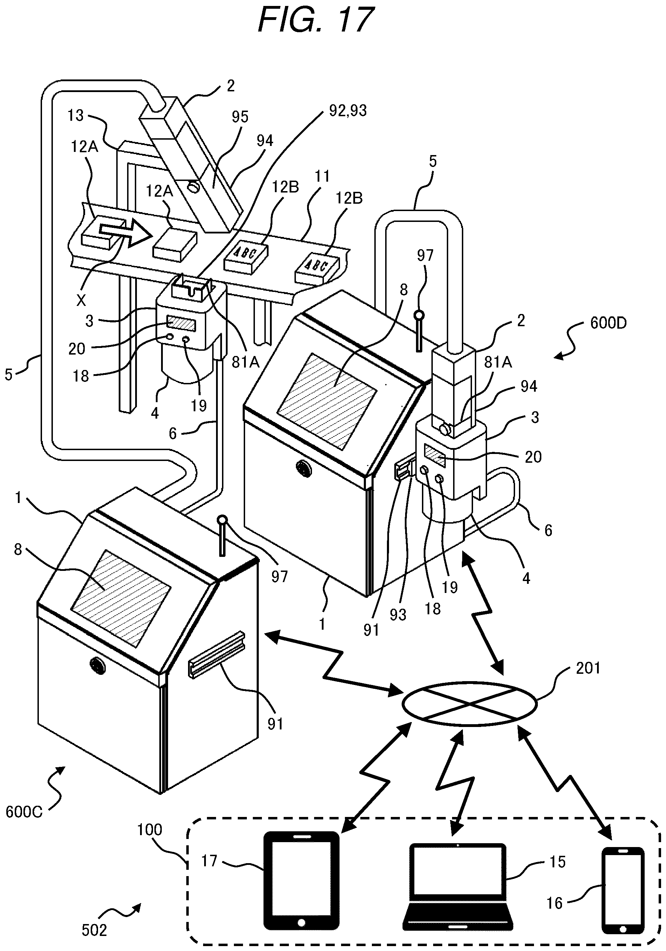

Fig. 17 illustrates a perspective view illustrating a situation in which the inkjet recording device and the inkjet recording system are used in the second embodiment are used. A description regarding Figs. 1 to 16 has already been given, and is therefore omitted. Referring to Fig. 17, a description will be given mainly of portions different from those in the first embodiment.

### <Description of Use State and Configuration>

Fig. 17 is a perspective view illustrating a situation in which the inkjet recording device is used in the second embodiment of the present invention. An inkjet recording system 503 is configured to include an inkjet recording device 600C or 600D and the external control device 100 that performs wireless communication with the inkjet recording device 600 via a network 201.

Each of the inkjet recording devices 600C and 600D includes the antenna 97 for the connection to the network 201. Each of the inkjet recording devices 600C and 600D is configured to be connected to the external control device 100 by using the network 201.

As the network 201, a "LAN (Local Area Network)", a "WAN (Wide Area Network)", the "Internet", a "mobile phone network", a network obtained by combining these, or the like can be used.

In the inkjet recording system 502 in the present embodiment also, in the same manner as in the inkjet recording system 501, it is possible to perform control when the operation start (ink ejection start) processing described with reference to Fig. 8, the operation stop (ink ejection stop) processing described with reference to Fig. 10, the head cleaning processing described with reference to Fig. 12, and the automatic ink circulation setting described with reference to Fig. 15.

### <Description of Effects>

According to the present embodiment, by allowing the inkjet recording device 600 to have a wireless communication function, it is possible to remotely check the state of the inkjet recording device 600 by using the external control device 100 without involving wired connection.

In addition, according to the present embodiment, by allowing the inkjet recording device 600 to have the wireless communication function and mounting the printing head 2 of the inkjet recording device 600 in the head mounting unit 3, it is possible to remotely perform daily work such as the operation start processing (ink ejection start) and the operation stop processing (ink ejection stop) by using the external control device 100 without involving the wired connection.

Moreover, according to the present embodiment, by allowing the inkjet recording device 600 to have the wireless communication function and mounting the printing head 2 of the inkjet recording device 600 in the head mounting unit 3, it is possible to remotely perform daily maintenance work such as the head cleaning processing or the setting of the automatic ink circulation processing by using the external control device 100 without involving the wired connection.

### Third Embodiment

Next, a description will be given of the inkjet recording system 503 in a third embodiment of the present invention. In the third embodiment also, the same configurations as those in Figs. 1 to 17 described in the first embodiment and the second embodiment can be adopted.

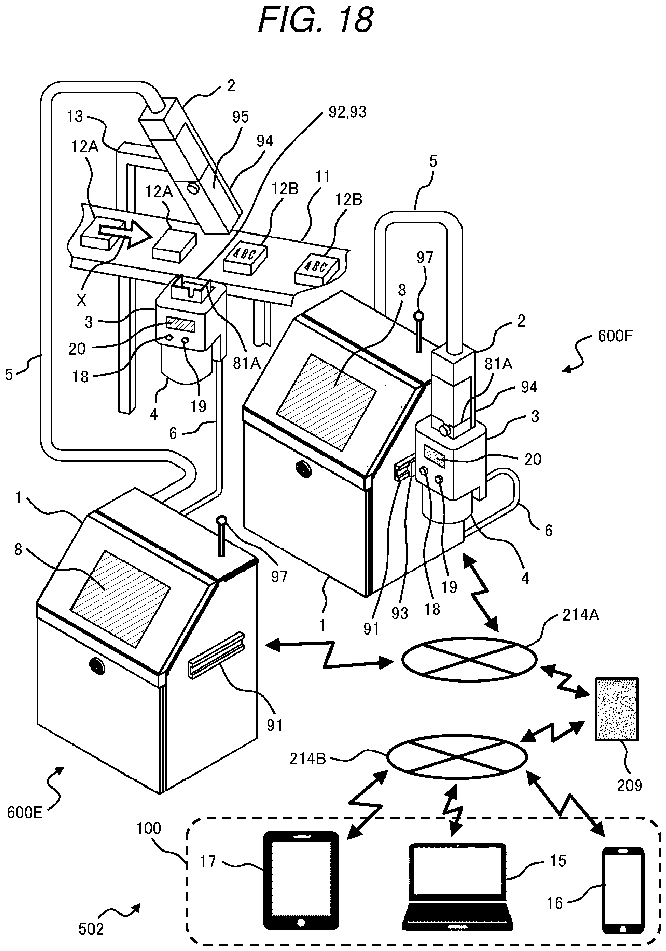

Fig. 18 illustrates a perspective view illustrating a situation in which the inkjet recording device and the inkjet recording system are used in the third embodiment. A description regarding Figs. 1 to 17 has already been given, and is therefore omitted. Referring to Fig. 18, a description will be given mainly of portions different from those in the first embodiment and the second embodiment.

### <Description of Use State and Configuration>

Fig. 18 is a perspective view illustrating a situation in which the inkjet recording device is used in the present embodiment. The inkjet recording system 503 is configured to include an inkjet recording device 600E or 600F, a cloud server 209 that performs wireless communication with the inkjet recording device 600 via a network 214A, and the external control device 100 that performs wireless communication with the cloud server 209 via a network 214B.

Each of the inkjet recording devices 600E and 600F includes the antenna 97 for the connection to the network 214A. Each of the inkjet recording devices 600E and 600F is configured to be connected to the external control device 100 by using the networks 214A and 214B and the cloud server 209.

Specifically, each of the inkjet recording devices 600E and 600F is connected to the first network 214A, and the first network 214A is further connected to the cloud server 209. The cloud server 209 is connected to the second network 214B, and the second network 214B is further connected to the external control device 100.

Thus, the inkjet recording devices 600E and 600F are connected via the first network 214A around the centering cloud server 209, and the external control device 100 is connected via the second network 214B. By providing such a system configuration, an effect of facilitating maintenance management over a wide area can be obtained.

Note that, as each of the networks 214A and 214B, a "LAN (Local Area Network)", a "WAN (Wide Area Network)", the "Internet", a "mobile phone network", a network obtained by combining these, or the like can be used.

### <Description of Remote Monitoring/Operation Flow>

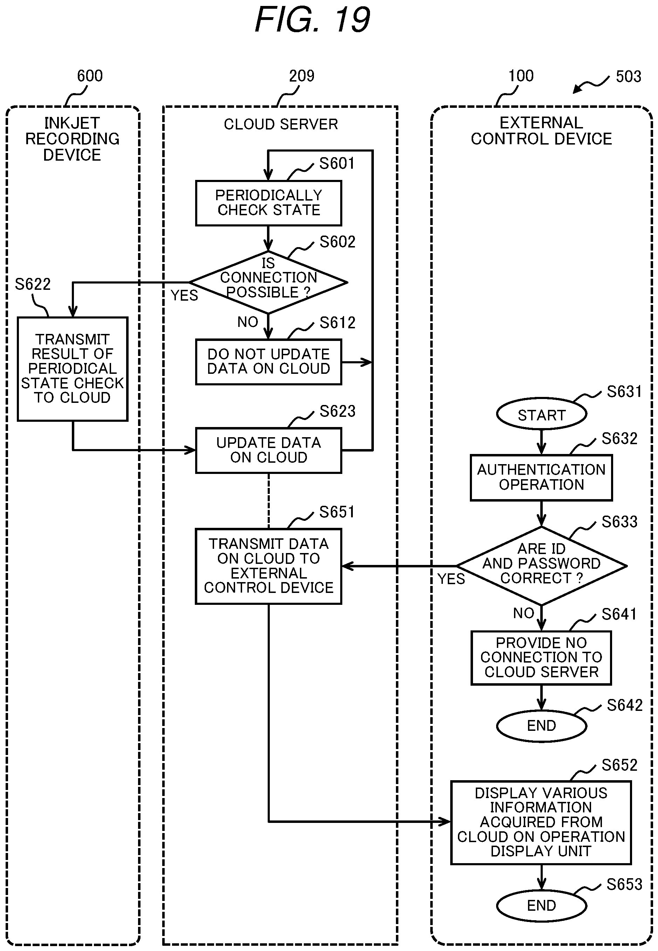

Referring to Fig. 19, a description will be given of a flow of a state monitoring operation in the inkjet recording system 503 according to the present embodiment. In Fig. 19, the reference numeral 600 denotes the inkjet recording device, the reference numeral 209 denotes the cloud server, and the reference number 100 denotes the external control device.

### <<Step S601>>

In Step S601, the cloud server 209 attempts to periodically check the state of the inkjet recording device 600. When the state is checked, the processing then moves to Step S602.

### <<Step S602>>

In Step S602, it is checked whether or not the cloud server 209 and the inkjet recording device 600 can be connected via the network 214A. When the connection is possible, the processing moves to Step S622. Meanwhile, when the connection is not possible, the processing moves to Step S612.

### <<Step S612>>

In Step S612, when the connection between the cloud server 209 and the inkjet recording device 600 has failed, the various information of the inkjet recording device 600 recorded in the cloud server 209 is not updated. Then, after a given time period elapsed, the processing in Step S601 is performed again.

### <<Step S622>>

In Step S622, the inkjet recording device 600 checks various information (operation data) as described in Step S131 in Fig. 6, and transmits the various information (a result of checking the state of the inkjet recording device 600) to the cloud server 209 via the network 214A. When this is completed, the processing then moves to Step S623.

### <<Step S623>>

In Step S623, the various information of the inkjet recording device 600 recorded in the cloud server 209 is updated to the latest various information. Then, after a given time period elapsed, the processing in Step S601 is performed again to maintain the various information of the inkjet recording device 600 recorded in the cloud server 209 in a new state.

### <<Step S631>>

Then, in Step S631 for the external control device 100, the external control device 100 is operated to start connection processing for communication between the external control device 100 and the inkjet recording device 600. The external control device 100 is connected to the cloud server 209 via the network 214B. When this is completed, the processing then moves to Step S632.

### <<Step S632>>

In Step S632, an ID and a password which are required for the connection between the external control device 100 and the inkjet recording device 600 are input to the external control device 100. When this is completed, the processing then moves to Step S633.

### <<Step S633>>

In Step S633, the ID and password each input in Step S632 are compared to and cross-checked against a correct ID and a correct password which are recorded in advance in the cloud server 209, and it is determined whether or not the input ID and password are correct (YES/NO).

Then, when it is determined that the input ID and password are not correct (NO), the processing moves to Step S641. Meanwhile, when it is determined that the input ID and password are correct (YES), a list including the device management number 122 of the inkjet recording device 600 registered in the ID is displayed and, when the device management number 122 intended to be confirmed is selected, the external control device 100 and the inkjet recording device 600 start the communication therebetween, and the processing moves to Step S651.

### <<Step S641>> and <<Step S642>>

In Step S641, a message indicating that either of the ID and password each input in Step S632 was not correct is displayed on the external control device 100. Then, in Step S642, the connection start processing for the communication between the external control device 100 and the inkjet recording device 600 is ended.

### <<Step S651>>

In Step S651, the various information of the inkjet recording device 600 recorded in the cloud server 209 is read and transmitted to the external control device 100 via the transmission means. Maintenance management information in the inkjet recording device 600, which is transmitted from the cloud server 209 to the external control device 100 is the maintenance management information described in the first embodiment. These have already been described, and therefore a description thereof is omitted herein. When this is completed, the processing then moves to Step S652.

### <<Step S652>> and <<Step S653>>

In Step S652, the various information acquired from the inkjet recording device 600 and stored in the cloud server 209 is displayed on the operation display unit 101 of the external control device 100. Then, in Step S653, on the basis of the information displayed in Step S652, a state is established in which a required button operation can be performed. For example, the state is a state as illustrated in Fig. 7 in the first embodiment.

In the inkjet recording system 503 in the present embodiment, it is possible for the cloud server 209 to recognize the state of the inkjet recording device 600. For example, when the inkjet recording device 600 has not been operated for a given period, in order to prevent trouble such that the ink 68A in the path dries out and sticks, it is also possible to automatically transmit an alert message from the cloud server 209 to the external control device 100 by e-mail or the like.

In the inkjet recording system 503 in the present embodiment also, in the same manner as in the inkjet recording systems 501 and 502, the control when the operation start (ink ejection start) processing described with reference to Fig. 8, the operation stop (ink ejection stop) processing described with reference to Fig. 10, the head cleaning processing described with reference to Fig. 12, and the automatic ink circulation setting described with reference to Fig. 15 can be performed.

In the present embodiment, the inkjet recording device 600, the cloud server 209, and the external control device 100 are wirelessly connected, but may also be connected by wire.

### <Description of Effects>

According to the present embodiment, even in a situation in which, e.g., the power of the inkjet recording device 600 is cut off and is not connected to the network 214A, by causing the various information of the inkjet recording device 600 to be periodically recorded in the cloud server 209, the inkjet recording device 600 is allowed to check the various information up to the time point when the inkjet recording device 600 was connected to the network 214A by using the external control device 100.

According to the present embodiment, on the basis of the various information (operation data) recorded in the cloud server 209, a caution message is transmitted to the external control device 100 in such a case where the inkjet recording device 600 has not been operated for a given period to be able to preliminarily prevent trouble resulting from the sticking of the ink in the paths of the inkjet recording device 600 or the like.

To summarize the present invention from the foregoing description, the present invention is characterized by including the following configuration.

The inkjet recording device includes: a printing head including a nozzle that particulates supplied ink and ejects ink particles, a charging electrode that charges the ink particles ejected from the nozzle, a deflection electrode that deflects the ink particles charged by the charging electrode, and a gutter that collects the ink not used for printing; a main body including an ink supply path for supplying the ink in an ink container to the printing head, an ink collection path for collecting the ink not used for the printing into the ink container, a solvent supply path for supplying a solvent in a solvent container to the ink container, and an adjustment unit that adjusts flows of the ink and the solvent in the respective paths; a main body control unit that controls the adjustment unit of the main body and an operation of the printing head; and a head mounting unit including a head mounting portion for mounting and containing the printing head, and a printing head detector that detects that the printing head is mounted. In the inkjet recording device, the main body control unit includes a transmission means that transmits, to an external control device connected thereto via a network, head mounting detection information indicating that the printing head is mounted in the head mounting unit on the basis of a detection signal from the printing head detector.

Further, the inkjet recording system includes: an inkjet recording device; a server connected to the inkjet recording device; a network connected to the server; and an external control device connected to the network to control the inkjet recording device via the server. The inkjet recording device includes: a printing head including a nozzle that particulates supplied ink and ejects ink particles, a charging electrode that charges the ink particles ejected from the nozzle, a deflection electrode that deflects the ink particles charged by the charging electrode, and a gutter that collects the ink not used for printing; a main body including an ink supply path for supplying the ink in an ink container to the printing head, an ink collection path for collecting the ink not used for the printing into the ink, a solvent supply path for supplying a solvent in a solvent container to the ink container, and a flow rate adjustment unit that adjusts flows of the ink and the solvent in the respective paths; a main body control unit that controls the flow rate adjustment unit of the main body and an operation of the printing head; and a head mounting unit including a head mounting portion for mounting and containing the printing head, and a printing head detector that detects whether or not the printing head is mounted. The external control device includes a head mounting checking means that can check that the printing head is mounted in the head mounting unit on the basis of head mounting detection information transmitted from the main body control unit and indicating that the printing head is mounted in the head mounting unit.

This can reduce labor of the worker by allowing daily maintenance management, such as printing head cleaning processing, to be remotely performed.

Further, operation information can remotely be checked when automatic ink circulation processing is periodically performed, and in the event of an abnormality, it is possible to contact a worker and give a request to take action.

It should be noted that the present invention is not limited to the embodiments described above, and includes various modifications. The embodiments described above have been described in detail to simply describe the present invention, and are not necessarily required to include all the described configurations. In addition, part of the configuration of one embodiment can be replaced with the configurations of other embodiments, and in addition, the configuration of the one embodiment can also be added with the configurations of other embodiments. In addition, the configuration of each of the embodiments can be subjected to addition, deletion, and replacement with respect to other configurations.

### List of Reference Signs

1 Main body
2 Printing head
3 Head mounting unit
4 Collection Container
5 Cable (for printing head)
6 Cable (for head mounting unit)
7 Main body control unit
8 Operation display unit
9 IoT sight server
10 Cable
11 Conveyer belt
12A Printing target object
12B Printing target object
13 Support bracket
14 Network
15 Personal computer
16 Smartphone
17 Tablet
18 Start button
19 Stop button
20 Display unit
21 Nozzle
23 Charging electrode
24 Deflection electrode
24A Positive electrode
24B Ground electrode
25 Gutter
26 Switch valve
27 Temperature sensor A
28 Magnetic sensor C
28A Electric wire
29 Heater
30 Temperature sensor C
31 Main ink container
31A Liquid level sensor
32 Auxiliary ink container
33 Solvent container
34 Pump (for supply)
35 Pump (for collection)
36 Pump (for circulation)
37 Pump (for solvent)
38 Temperature sensor D
39 Filter (for supply)
40 Filter (for collection)
41 Filter (for nozzle cleaning)
43 Filter (for head cleaning)
45 Viscosity meter
46 Pressure adjustment valve
47 Pressure sensor
48 Charge sensor
49 Solenoid valve (for supply)
50 Solenoid valve (for collection)
53 Solenoid valve (for solvent replenishment)
54 Solenoid valve (for ink replenishment)
55 Solenoid valve (for nozzle cleaning)
56 Solenoid valve (for head cleaning)
57 Solenoid valve (for viscosity measurement)
58 Solenoid valve (for main body circulation)
59 Solenoid valve (for circulation)
60 Pump (for drying)
61 Pump (for suction)
62 Exhaust duct connection portion
68A Ink
68B Ink particle
68B1 Ink particle
68B2 Charging charge
68C Ink
69A Solvent
71 Cleaning tank
71A Mounting portion
72 Cleaning nozzle
72A Liquid ejection port A portion
72B Liquid ejection port B portion
73 Air supply nozzle
74 Float
75 Magnet A
76 Magnetic sensor A
76A Electric wire
77 Container
77A Mounting portion
77B Liquid reservoir
77C Inner threaded portion
78 Partition
78A Liquid flow-in port portion
78B Liquid flow-out port portion
79 Holder
80 Temperature sensor B
80A Electric wire
81 Cleaning block
81A Head mounting portion
81B Head insertion portion
81C Hole portion
81D Flow path A portion
81E Flow path B portion
81F Flow path C portion
82 Lid hinge
83 Lid member
84 Magnetic sensor B
84A Electric wire
85 Cover
86 Magnet B
87 Magnet C
88 Suction joint
89 Liquid joint
90 Air joint
91 Fixing portion
92 Fixing jig (for conveyer)
93 Fitting portion
94 Head base
95 Protection cover
97 Antenna
100 External control device
101 Operation display unit
111 Current date and time
112 Final operation date and time
113 Current device state
114 Device ambient temperature
115 Ink viscosity
116 Remaining ink amount
117 Remaining solvent amount
118 Printing head mounting state in head mounting unit
119 Collection container mounting state in head mounting unit
120 Automatic ink circulation setting
121 Next circulation date and time
122 Device management number
131 Message display area
141 Ink ejection start button
142 Ink stop button
143 Head cleaning start button
144 Power OFF button
151 Remote state display/operation
152 Remote operation
201 Network
209 Cloud Server
214A Network
214B Network
301 MPU
302 Bus line
306 ROM
307 RAM
311 Viscosity measurement circuit
312 Pressure detection circuit
313 Liquid level detection circuit
314 Pump control circuit
315 Solenoid valve drive circuit
316 Temperature detection circuit
317 Heater detection circuit
322 Collection container sensor detection circuit
323 Printing head detection circuit
331 Excitation voltage generation circuit
332 Deflection voltage generation circuit
341 Phase search charge signal generation circuit
342 Printing charge signal generation circuit
343 D/A converter
344 Amplification circuit
351 Phase determination circuit
352 A/D converter
353 Amplification circuit
501-503 Inkjet recording systems
600 Inkjet recording device
801-804 Paths (for supply)
806 Path (for replenishment)
808 Path (for main body circulation)
811-812 Paths (for collection)
814 Path (for exhaust)
821-822 Paths (for head circulation)
824 Path (for viscosity measurement)
831 Path (for solvent supply)
833 Path (for solvent replenishment)
835 Path (for nozzle cleaning)
837 Path (for head cleaning)
841 Path (for air supply)
843 Path (for air suction)
901-903 Confluence paths
921-922 Branched paths

## Claims

1. An inkjet recording device comprising:
a printing head including a nozzle that particulates supplied ink and ejects ink particles, a charging electrode that charges the ink particles ejected from the nozzle, a deflection electrode that deflects the ink particles charged by the charging electrode, and a gutter that collects the ink not used for printing;
a main body including an ink supply path for supplying the ink in an ink container to the printing head, an ink collection path for collecting the ink not used for the printing into the ink container, a solvent supply path for supplying a solvent in a solvent container to the ink container, and a flow rate adjustment unit that adjusts flows of the ink and the solvent in the respective paths;
a main body control unit that controls the flow rate adjustment unit of the main body and an operation of the printing head; and
a head mounting unit including a head mounting portion for mounting and containing the printing head, and a printing head detector that detects that the printing head is mounted, wherein
the main body control unit includes a transmission unit that transmits, to an external control device connected thereto via a network, head mounting detection information indicating that the printing head is mounted in the head mounting unit on the basis of at least a detection signal from the printing head detector.

2. The inkjet recording device according to claim 1, wherein
the transmission unit of the main body control unit further transmits ink ejection information indicating that the ink is ejected from the nozzle of the printing head to the external control device connected thereto via the network.

3. The inkjet recording device according to claim 2, wherein
the main body control unit performs control to start the ejection of the ink from the nozzle on the basis of an instruction from the external control device.

4. The inkjet recording device according to claim 3, wherein
the printing head includes a charge sensor that detects an amount of charge of the ink particles ejected from the nozzle and charged by the charging electrode, and
the main body control unit includes an abnormality occurrence notification unit that stops the ejection of the ink from the nozzle when the amount of charge is outside a threshold set in advance and notifies the external control device of occurrence of a charging abnormality.

5. The inkjet recording device according to claim 3, wherein
the printing head includes a heater that heats the ink to be supplied to the nozzle, and a temperature sensor for measuring an ambient temperature around the printing head, and
the main body control unit includes a heating notification unit that notifies the external control device of heating information indicating that heating using the heater is necessary when the temperature measured by the temperature sensor is lower than a predetermined temperature set in advance.

6. The inkjet recording device according to claim 3, wherein
the main body includes a viscosity measurement unit that measures a viscosity of the ink contained in the ink container, and
the main body control unit includes a viscosity adjustment unit that performs viscosity adjustment by continuing ink circulation in which the ink is ejected from the nozzle and collected from the gutter when the viscosity measured by the viscosity measurement unit is lower than a predetermined viscosity set in advance, and a viscosity adjustment notification unit that notifies the external control device of viscosity adjustment completion information indicating that the adjustment of the viscosity to the predetermined viscosity is completed.

7. The inkjet recording device according to claim 3, wherein
when the ink is ejected from the nozzle of the printing head, the main body control unit performs stop control to stop the ejection of the ink from the nozzle on the basis of an instruction from the external control device.

8. The inkjet recording device according to claim 1, wherein
the head mounting unit includes a collection container that contains a cleaning liquid dripping from the printing head below the printing head mounting portion, and a collection container detector that determines whether or not the collection container is mounted, and
the main body control unit includes a collection container mounting notification unit that notifies the external control device of collection container mounting information indicating a state where the collection container is mounted in the head mounting unit.

9. The inkjet recording device according to claim 8, wherein
the head mounting unit or the printing head includes a cleaning nozzle that ejects the solvent for cleaning the printing head mounted in the head mounting unit, and
the main body control unit performs solvent ejection control to eject the solvent from the cleaning nozzle on the basis of an instruction from the external control device.

10. The inkjet recording device according to claim 9, wherein
the printing head includes a charge sensor for detecting an amount of charge of the ink particles ejected from the nozzle and charged by the charging electrode, and
the main body control unit includes a charging abnormality notification unit that notifies the external control device of charging abnormality information indicating occurrence of a charging abnormality when a detection value from the charge sensor exceeds a threshold set in advance in a state where, after the printing head is cleaned with the solvent ejected from the cleaning nozzle, a voltage is applied to the deflection electrode.

11. The inkjet recording device according to claim 9, wherein
the head mounting unit includes a collection container liquid amount detection unit that detects that a liquid amount in the collection container is equal to or more than a given value, and
the main body control unit includes a liquid amount abnormality notification unit that notifies the external control device of liquid amount abnormality information indicating occurrence of a liquid amount abnormality when it is detected by the collection container liquid amount detection unit that the liquid amount in the collection container is equal to or more than the given value.

12. The inkjet recording device according to claim 1, wherein
the head mounting unit is connected to the main body via a cable.

13. The inkjet recording device according to claim 2, wherein
the main body control unit includes a non-ejection time period notification unit that records a date and a time when the ink is ejected from the nozzle of the printing head and notifies the external control device of non-ejection time period information indicating that the ink is not ejected from the nozzle when the ink is not ejected from the nozzle for a time period equal to or longer than a set time period.

14. The inkjet recording device according to claim 2, wherein
the main body control unit includes:
an ink circulation cycle unit that performs an operation of repeating an ink circulation cycle in which the ink is ejected from the nozzle at set intervals in a state where the printing head is mounted in the head mounting unit to be circulated in each of the paths and then the ejection of the ink from the nozzle is stopped to result in a standby state;
a circulation cycle abnormality notification unit that notifies the external control device of circulation cycle abnormality information indicating occurrence of an abnormality in the ink circulation cycle while the ink circulation cycle is implemented; and
a circulation cycle implementation situation notification unit that notifies the external control device of circulation cycle implementation information indicating a situation in which the ink circulation cycle is implemented.

15. An inkjet recording system comprising:
the inkjet recording device according to any one of claims 1 to 14;
a server connected to the inkjet recording device;
a network connected to the server; and
an external control device connected to the network to control the inkjet recording device via the server.

16. An inkjet recording system comprising:
an inkjet recording device;
a server connected to the inkjet recording device;
a network connected to the server; and
an external control device connected to the network to control the inkjet recording device via the server, wherein
the inkjet recording device includes:
a printing head including a nozzle that particulates supplied ink and ejects ink particles, a charging electrode that charges the ink particles ejected from the nozzle, a deflection electrode that deflects the ink particles charged by the charging electrode, and a gutter that collects the ink not used for printing;
a main body including an ink supply path for supplying the ink in an ink container to the printing head, an ink collection path for collecting the ink not used for the printing into the ink container, a solvent supply path for supplying a solvent in a solvent container to the ink container, and a flow rate adjustment unit that adjusts flows of the ink and the solvent in the respective paths;
a main body control unit that controls the flow rate adjustment unit of the main body and an operation of the printing head; and
a head mounting unit including a head mounting portion for mounting and containing the printing head, and a printing head detector that detects that the printing head is mounted,
the external control device includes a head mounting checking unit that can check that the printing head is mounted in the head mounting unit on the basis of head mounting detection information transmitted from the main body control unit and indicating that the printing head is mounted in the head mounting unit.

17. The inkjet recording system according to claim 16, wherein
the inkjet recording device and the external control device are connected via a first network connecting the inkjet recording device and the server, and a second network connecting the server and the external control device, and
using the external control device, the inkjet recording device is maintained and managed via the second network, the server, and the first network.

18. The inkjet recording system according to claim 17, wherein
the external control device includes an ink ejection checking unit that can check that the ink is ejected on the basis of ink ejection information transmitted from the main body control unit and indicating that the ink is ejected from the nozzle of the printing head.

19. The inkjet recording system according to claim 18, wherein
the main body control unit of the inkjet recording device performs control to start the ejection of the ink from the nozzle on the basis of an instruction from the external control device.

20. The inkjet recording system according to claim 19, wherein
the printing head of the inkjet recording device includes a charge sensor that detects an amount of charge of the ink particles ejected from the nozzle and charged by the charging electrode,
the main body control unit of the inkjet recording device includes an abnormality occurrence notification unit that stops the ejection of the ink from the nozzle when a level of the amount of charge is outside a threshold set in advance and notifies the server of occurrence of an abnormality, and
the external control device includes an abnormality occurrence checking unit that checks the occurrence of the abnormality via the server.

21. The inkjet recording system according to claim 17, wherein
the main body control unit of the inkjet recording device incudes a viscosity measurement unit that measures a viscosity of the ink contained in the ink container,
the main body control unit of the inkjet recording device further includes:
a viscosity adjustment unit that performs viscosity adjustment by continuing ink circulation in which the ink is ejected from the nozzle and collected from the gutter when the viscosity measured by the viscosity measurement unit is lower than a predetermined viscosity set in advance; and
a viscosity adjustment notification unit that notifies the server of viscosity adjustment completion information indicating that the adjustment of the viscosity to the predetermined viscosity is completed, and
the external control device further includes a viscosity adjustment checking unit that checks a result of the viscosity adjustment via the server.

22. The inkjet recording system according to claim 17, wherein
the head mounting unit of the inkjet recording device includes a collection container that contains a cleaning liquid dripping from the printing head below the printing head mounting portion, and a collection container detector that determines whether or not the collection container is mounted, and
the external control device includes a collection container mounting checking unit that checks that the collection container is mounted in the head mounting unit.

23. The inkjet recording system according to claim 22, wherein
the head mounting unit of the inkjet recording device or the printing head includes a cleaning nozzle that ejects the solvent for cleaning the printing head mounted in the head mounting unit, and
the main body control unit of the inkjet recording device performs control to eject the solvent from the cleaning nozzle on the basis of an instruction from the external control device.

24. The inkjet recording system according to claim 23, wherein
the printing head of the inkjet recording device includes a charge sensor for detecting an amount of charge of the ink particles ejected from the nozzle and charged by the charging electrode,
the main body control unit of the inkjet recording device includes a charging abnormality notification unit that notifies the server of occurrence of an abnormality when a detection value from the charge sensor exceeds a threshold set in advance in a state where, after the printing head is cleaned with the solvent ejected from the cleaning nozzle, a voltage is applied to the deflection electrode, and
the external control device includes a charging abnormality checking unit that checks the occurrence of the abnormality via the server.

25. The inkjet recording system according to claim 17, wherein
the server records date and time information of a date and a time when the ink is ejected from the nozzle of the printing head, and
the external control device includes a set period checking unit that checks a period which is set on the basis of the date and time information obtained via the server and during which the ink is not ejected from the nozzle.

26. The inkjet recording system according to claim 17, wherein
the main body control unit of the inkjet recording device includes:
an ink circulation cycle unit that performs an operation of repeating an ink circulation cycle in which the ink is ejected from the nozzle at set intervals in a state where the printing head is mounted in the head mounting unit to be circulated in each of the paths and then the ejection of the ink from the nozzle is stopped to result in a standby state; and
a circulation cycle abnormality notification unit that notifies the server of circulation cycle abnormality information of occurrence of an abnormality in the ink circulation cycle while the ink circulation cycle is implemented, and
the external control device includes:
a circulation cycle checking unit that checks a situation in which the ink circulation cycle is implemented via the server; and
a circulation cycle abnormality checking unit that checks the occurrence of the abnormality in the ink circulation cycle.

27. An inkjet recording system comprising an inkjet recording device, a first network connected to the inkjet recording device, a server connected to the first network, a second network connected to the server, and an external control device connected to the second network, the inkjet recording system using the external control device to maintain and manage the inkjet recording device via the second network, the server, and the first network, wherein
the inkjet recording device includes:
a printing head including a nozzle that particulates supplied ink and ejects ink particles, a charging electrode that charges the ink particles ejected from the nozzle, a deflection electrode that deflects the ink particles charged by the charging electrode, and a gutter that collects the ink not used for printing;
a main body including an ink supply path for supplying the ink in an ink container to the printing head, an ink collection path for collecting the ink not used for the printing into the ink container, a solvent supply path for supplying a solvent in a solvent container to the ink container, and a flow rate adjustment unit that adjusts flows of the ink and the solvent in the respective paths; and
a main body control unit that controls the flow rate adjustment unit of the main body and an operation of the printing head,
the server has a function of recording date and time information of a date and time when the ink is ejected from the nozzle of the printing head, and
the external control device includes a non-ejection period checking unit that checks a period which is set on the basis of the date and time information obtained via the server and during which the ink is not ejected from the nozzle.

28. The inkjet recording system according to claim 27, wherein
the server includes a non-ejection time period notification unit that notifies the external control device of a non-ejection time period when the ink is not ejected from the nozzle for a period equal to or longer than a set time period.
